(19) Europäisches Patentamt
European Patent Office
Office européen des brevets

(11) **EP 4 082 330 A1**

(12) **EUROPÄISCHE PATENTANMELDUNG**

(43) Veröffentlichungstag:
**02.11.2022 Patentblatt 2022/44**

(51) Internationale Patentklassifikation (IPC):
**A01G 9/24** (2006.01)   **A01G 9/14** (2006.01)

(21) Anmeldenummer: **21171103.1**

(52) Gemeinsame Patentklassifikation (CPC):
**A01G 9/246; A01G 9/143; A01G 9/24**

(22) Anmeldetag: **29.04.2021**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **P9 Group AG**
**6205 Eich (CH)**

(72) Erfinder:
• HIRTZ, Simon
  5037 Muhen (CH)
• HIRTZ, Cyrill
  5037 Muhen (CH)
• HIRTZ, Cédric
  5037 Muhen (CH)
• WEBER, Alan Kurt
  6205 Eich (CH)
• WEBER, Ralf
  5734 Reinach (CH)
• HUNZIKER, Pascal Simon
  5734 Reinach (CH)

(74) Vertreter: **Koelliker, Robert**
**Patentanwalt Koelliker GmbH**
**Bahnhofstrasse 11**
**6210 Sursee (CH)**

(54) **MIKROKLIMATISCHES GEWÄCHSHAUS MIT AUTOMATISIERTEM WACHSTUMSBEREICH UND EINER VIELZAHL VON KEIMTISCHEN**

(57)   Die vorliegende Erfindung bezieht sich auf ein mikroklimatisches Gewächshaus (1) zur Kultivierung von Kulturpflanzen P umfassend einen automatisierten Wachstumsbereich (2) mit einer Vielzahl von Keimtischen (3) mit Setzlingen (4), wobei der automatisierte Wachstumsbereich (2) eine erste Klimazone (2.1) und letzte Klimazone (2.n) und ein Robotersystem (5) mit mindestens einem Roboter (5.1) und eine Haustechnik (6) umfasst, wobei sich die Klimazonen in Temperatur T, relativer Luftfeuchtigkeit RH, Belichtung E und/oder Koh-lendioxidgehalt ($CO_2$) unterscheiden und somit ein individuelles Klima aufweisen, wobei die Keimtische (3) je Klimazone (2.1, ..., 2.n) weniglagig, insbesondere einlagig, angeordnet sind, und die Raumhöhe $R_1$ der ersten Klimazone (2.1) kleiner ist als die Raumhöhe $R_n$ der letzten Klimazone (2.n).

Beansprucht wird zudem auch ein Verfahren zum Kultivieren der Kulturpflanzen P im erfindungsgemässen Gewächshaus (1).

Fig. 1

**Beschreibung**

Die vorliegende Erfindung bezieht sich auf ein Gewächshaus zur Kultivierung von Kulturpflanzen P sowie ein Verfahren zum Kultivieren der Kulturpflanzen P im erfindungsgemässen Gewächshaus.

Aufgrund der wachsenden Weltbevölkerung werden stets grössere Mengen an landwirtschaftlichen Produkten benötigt. Gleichzeitig soll versucht werden, den ökologischen Fussabdruck der Landwirtschaft zu verringern. Ein in der neueren Zeit viel diskutierter Ansatz, mit welchem beide Ziele erreicht werden sollen, bildet die vertikale Landwirtschaft. Mit dieser soll eine für die Massenproduktion tragfähige Landwirtschaft aufgebaut werden.

Unter vertikaler Landwirtschaft wird die Massenproduktion von pflanzlichen und/oder tierischen Lebensmitteln verstanden, wobei sich diese in Gebäuden auf mehreren, übereinander angeordneten Ebenen und typischerweise nahe an den Ballungsgebieten, d.h. nahe an den Konsumenten, befinden sollen. Dabei sind die Ebenen für die pflanzliche Lebensmittelproduktion typischerweise in einem Raum auf verschiedenen Regalen angeordnet, und bei der tierischen Lebensmittelproduktion auf verschiedenen Stockwerken.

In einer Ausführungsform der vertikalen Landwirtschaft werden in einem Gebäude sowohl pflanzliche wie tierische Lebensmittel verschiedener Art hergestellt, wodurch eine hohe Öko-Effektivität angestrebt werden kann. In einer anderen Ausführungsform wird ein einzelnes Gebäude spezifisch für die Produktion eines pflanzlichen und tierischen Produkts eingesetzt, wobei pflanzliche Produkte idealerweise vor Ort geerntet resp. Tiere geschlachtet und weiter zu Zwischen- und/oder Endprodukten verarbeitet werden.

Die vertikale Agrarlandwirtschaft, d.h. die Herstellung von pflanzlichen Nutzpflanzen - beispielsweise Lebensmittel - mittels vertikaler Landwirtschaft, bietet viele Vorteile. So kann die Produktivität nicht nur um beispielsweise einen Faktor 4 bis 6 oder mehr erhöht werden, sondern sie ermöglicht mit einer saisonunabhängigen Produktion ganzjährige Ernten. Ernteausfälle bedingt durch Wettereinflüsse und Schädlinge können vermieden und das Verderben von geernteten Früchten und Gemüse kann minimiert werden. Zudem entfallen viele Transportwege und die Lagerung von geernteten Produkten kann drastisch reduziert werden. Während der Nutzpflanzenproduktion kann zudem die benötigte Wassermenge, der Einsatz von Bioziden und Dünger wie auch der Verbrauch von fossilen Brennstoffen z.T. stark reduziert werden. Zudem können auch bestehende Energienetze entlastet werden.

Durch den Ausbau der vertikalen Landwirtschaft kann zudem die benötigte Agrarfläche verringert werden. Frei werdende Gebiete können renaturiert und beispielsweise in Wälder, Moore oder Brachen überführt werden oder es können Parkanlagen entstehen. Dadurch wird die Artenvielfalt vergrössert, die Biodiversität verbreitert und der Mensch erhält mehr Erholungsfläche.

So schlägt die WO-A-2019/077571 ein Verfahren vor zum Züchten von landwirtschaftlichen Produkten in geschlossenen Umgebungen, insbesondere für vertikale Betriebe, welches folgende Schritte umfasst: Anordnen der landwirtschaftlichen Produkte auf mehreren Schalen; Anordnen der Vielzahl von Schalen in mehreren klimatisierten Wachstumsräumen in einer geschlossenen Umgebung, wobei jeder Raum künstliche Beleuchtung und ein optimiertes Klima aufweist für eine bestimmte Art von landwirtschaftlichen Erzeugnissen oder für eine bestimmte Wachstumsphase der landwirtschaftlichen Erzeugnisse; Bewegen der Schalen von einem ersten Wachstumsraum in einen zweiten Wachstumsraum, wobei jeder Wachstumsraum künstliche Beleuchtung aufweist sowie eine differenzierte Klimatisierung basierend auf einer bestimmten Wachstumsphase der landwirtschaftlichen Produkte. Die Erfindung der WO-A-2019/077571 offenbart auch ein System zum Implementieren des beschriebenen Verfahrens. Dabei wird eine Vielzahl an Schalen mit darin enthaltenden Pflanzen übereinander an einem starren Gerüst angeordnet. Werden diese in einem Wachstumsraum platziert, entsteht ein Gradient einzelner Klima-Parameter wie beispielsweise Temperatur und Kohlendioxid. Um diesen Effekt zu reduzieren, werden die Pflanzen in den Schalen mit dem starren Gerüst in einem Klimaraum kultiviert, welcher seitliche Schlitze aufweist, um mittels einer aufwändigen Gaszirkulation den Gasaustausch auf den verschiedenen Pflanzenebenen zu regeln. Um die Pflanzen auf den verschiedenen Ebenen des Gerüsts separat zu belichten und zu bewässern, müssen die einzelnen Ebenen Strom- und Wasser-Kupplungen aufweisen. Für einen automatisierten Betrieb kann dies jedoch schnell zu Störungen führen, wenn sich das Gerüst mit den diversen Kupplungselementen nicht passgenau mit den entsprechenden Kupplungsteilen des Klimaraums verbindet. Zudem eignet sich das vorgeschlagene Verfahren und das System nur für Pflanzen mit - im ausgewachsenen Stadion - geringer Höhe.

Somit ist es die Aufgabe der vorliegenden Erfindung, ein Gewächshaus für die vertikale, automatisierte Landwirtschaft bereitzustellen, welches die Nachteile des Stands der Technik behebt. Dabei soll das Gewächshaus auch für hochwachsende Pflanzen, wie beispielsweise Tomaten, geeignet sein. Dabei soll der Betrieb des Gewächshauses möglichst effektiv, effizient und störungsarm sein, wobei der Einsatz von Schädlingsbekämpfungsmitteln wie Pestiziden und Fungiziden stark reduziert oder sogar ganz verhindert werden soll. Die Kultivierung der Pflanzen soll somit Energie-optimiert und Ressourcen-schonend möglich sein und insbesondere ohne Kupplungselemente für Licht und Wasser auskommen. Zudem soll es möglich sein einen kontinuierlichen, und somit einen regelmässigen und täglichen Output an kultivierten Pflanzen zu erzielen.

Die Aufgabe konnte überraschenderweise gelöst werden mit einem mikroklimatischen Gewächshaus (1) zur Kultivierung von Kulturpflanzen P umfassend einen automatisierten Wachstumsbereich (2) mit einer Vielzahl von Keimtischen (3), wobei die Keimtische (3) eine Vielzahl von Setzlingen (4) der Kulturpflanzen P enthalten, wobei der automatisierte Wachstumsbereich (2)

- eine erste Klimazone (2.1) und letzte Klimazone (2.n), sowie gegebenenfalls mindestens eine zwischen der ersten und letzten Klimazone angeordnete weitere Klimazone (2.2, ..., 2.n-1) aufweist, wobei die Klimazonen gemeinsam die Klimazonen (2.1, ..., 2.n) bilden, wobei die Klimazonen (2.1, ..., 2.n) im automatisierten Wachstumsbereich (2) statisch angeordnet sind und sich in Temperatur T, Belichtung E, relativer Luftfeuchtigkeit RH und/oder Kohlendioxidgehalt ($CO_2$) unterscheiden und somit ein individuelles Klima aufweisen,
- ein Robotersystem (5) mit mindestens einem Roboter (5.1) zum Einfügen der Keimtische (3) in die erste Klimazone (2.1) und/oder zur Entnahme der Keimtische (3) aus der letzten Klimazone (2.n), und
- eine Haustechnik (6) zum Einstellen von individuellen Klimata sowie zum Austauschen der Gasphase in den Klimazonen (2.1, ..., 2.n),

umfasst, dadurch gekennzeichnet, dass

- die Keimtische (3) je Klimazone (2.1, ..., 2.n) weniglagig angeordnet sind, wobei die Keimtische (3) mit den jüngsten Setzlingen (4) der ersten Klimazone (2.1) und die Keimtische (3) mit den ältesten Setzlingen (4) der letzten Klimazone (2.n) zugeordnet sind, und
- die Raumhöhe $R_1$ der ersten Klimazone (2.1) kleiner ist als die Raumhöhe $R_n$ der letzten Klimazone (2.n).

Beansprucht wird auch ein Verfahren zum Kultivieren von Kulturpflanzen P im Gewächshaus (1) nach mindestens einem der Ansprüche 1 bis 9, dadurch gekennzeichnet, dass die Keimtische (3)

i) mit einer Vielzahl von Setzlingen (4) bestückt werden und die Keimtische (3), gegebenenfalls mittels Roboter (5.1) des Robotersystems (5), in die erste Klimazone (2.1) des Wachstumsbereichs (2) eingefügt werden,
ii) in der ersten Klimazone (2.1) während einer ersten Wachstumsdauer W1 verweilt und anschliessend für die zweite Wachstumsdauer W2 in die nächste Klimazone (2.2, 2.n) verschoben werden,
iii) gegebenenfalls für weitere Wachstumsdauer W3... Wn-1 in nachfolgende Klimazonen (2.3, .... 2.n-1) verschoben werden, bis die Keimtische (3) die letzte Wachstumsdauer Wn in der letzten Klimazone (2.n) erreicht haben, und
iv) nach Ablauf der letzten Wachstumsdauer Wn die Keimtische (3) mit den so kultivierten Kulturpflanzen P aus der letzten Klimazone (2.n) entfernt werden.

Das erfindungsgemässe mikroklimatischen Gewächshaus (1) und das erfindungsgemässe Verfahren zum Kultivieren von Kulturpflanzen P im Gewächshaus (1) weisen - neben den für die vertikale Agrarlandwirtschaft bekannten Vorteilen - überraschenderweise eine Vielzahl weiterer Vorteile auf, die in dieser Art und Weise nicht erwartet werden konnten. So können auch hochwachsende Kulturpflanzen P äusserst effizient und unter Ausschluss von äusseren Bedingungen wie beispielsweise Frost, Trockenheit, Schädlinge und/oder mutwillige Zerstörung vollautomatisiert kultiviert werden. Es ist auch möglich, bei Bedarf GMP-Anforderungen und/oder GACP-Anforderungen anzuwenden. Bei geeigneter Produktionsfahrweise kann eine kontinuierliche, tägliche Ernte erhalten werden, die vor Ort verarbeitet werden kann. Dadurch müssen die geernteten Kulturpflanzen P nicht lange gelagert werden, wodurch keine Kulturpflanzen verderben. Auch entfällt der Transport der geernteten Pflanzen, da diese direkt vor Ort verarbeitet werden können. Auch werden wesentlich weniger Pestizide und/oder Fungizide benötigt - oder diese können sogar ganz weggelassen werden. Dadurch entsteht eine sogenannte «Building-Integrated Agriculture» (BIA) mit sehr grosser Öko-Effektivität.
Da in den Klimazonen mittels Haustechnik (6) ein für die Pflanzen und das jeweilige Wachstumsstadium ein rundum optimiertes Klima erstellt werden kann, wird ein wesentlich schnelleres Pflanzenwachstum - im Vergleich zu herkömmlichen Produktionsverfahren - erzielt. So ist es möglich, die Temperatur, die relative Luftfeuchte und die Dosierung von beispielsweise Wasser, Nährstoffen, Licht, $CO_2$ und gegebenenfalls Musik, d.h. Beschallung, gemäss individuellem Bedarf der Pflanze und abhängig von der jeweiligen Wachstumsstufe einzustellen. Dadurch wird eine sogenannte «Controlled Environment Agriculture» (CEA) erzielt, bei welcher das Mikroklima optimal eingestellt werden kann.
Besonders vorteilhaft ist es, dass die Setzlinge (4) während der ganzen Zeit im Wachstumsbereich (2) im gleichen Keimtisch bleiben können, da sie nicht umgetopft werden müssen. Dies verringert den Arbeitsaufwand drastisch. Trotzdem ist es möglich, Kulturpflanzen P auch mit ausgewachsener Grösse von einem Meter und mehr im erfindungsgemässen Gewächshaus und mit dem erfindungsgemässen Verfahren zu kultivieren.
Äusserst vorteilhaft ist es zudem, dass Leitungssysteme wie Elektrizität, Wasser, Nährlösung, Beschallung, Gaseinlass und Gasauslass, beispielsweise beim Wechseln der Keimtische (3) von einer Klimazone zur andern, nicht zusammengekoppelt und wieder entkoppelt werden müssen, da diese Leitungssysteme fest in resp. an den statischen Klimazonen (2.1, ..., 2.n) installiert sind und lediglich die Setzlinge (4) mit den Keimtischen (3) verschoben werden.

Dadurch wird eine wichtige Störungsquelle ausgeschaltet.

Dass die Raumhöhe $R_1$ der ersten Klimazone (2.1) kleiner ist als die Raumhöhe $R_n$ der letzten Klimazone (2.n) ist ein weiterer sehr grosser Vorteil gegenüber herkömmlichen Systemen. Denn in der ersten Klimazone (2.1) ist die Höhe des Setzlings (4) wesentlich kleiner als in der letzten Klimazone (2.n), in welcher der Setzling (4) ausgewachsen ist. Somit benötigt der Setzling (4) in der ersten Klimazone (2.1) eine kleinere Raumhöhe R als der Setzling (4) in der letzten Klimazone (2.n). Indem nun die Raumhöhe $R_1$ der ersten Klimazone (2.1) kleiner ist als die Raumhöhe $R_n$ der letzten Klimazone (2.n) muss eine geringere Gasmenge ausgetauscht werden. Dadurch wird die Energieeffizienz deutlich erhöht, da wesentlich weniger Gas gekühlt und/oder erwärmt werden muss. Auch wird weniger $CO_2$ benötigt, um die gewünschte $CO_2$-Konzentration zu erhalten. Da die Pflanzen zudem Wasser verdunsten, ist der Wassergehalt in der Abluft höher als in der Zuluft. Wird nun die Gasphase wieder aufbereitet und rezykliert, muss dementsprechend weniger Wasser kondensiert werden. Diese Effekte wirken sich äusserst positiv auf den Energiebedarf und somit auf die Produktionskosten und Öko-Bilanz aus.

Da die Setzlinge (4) in den Keimtischen (3) zudem einlagig oder höchstens weniglagig in den Klimazonen (2.1, ..., 2.n) angeordnet werden, sind die einzelnen Klimazonen (2.1, ..., 2.n) voneinander abgekoppelt und die Setzlinge sind keinem Wärmestau ausgesetzt, da sich keine Stauwärme bilden kann. Dadurch können sie optimal gedeihen und verdorren nicht.

Da sich die Klimazonen (2.1, ..., 2.n) räumlich voneinander unterscheiden und die Setzlinge (4) mit den Keimtischen (3) von Klimazone zu Klimazone wandern, können einzelne Elemente in den Klimazonen statisch angeordnet werden, wodurch die Kulturpflanzen P im Gewächshaus effektiver kultiviert werden können.

Somit erlaubt das erfindungsgemässe Gewächshaus (1) und das erfindungsgemässe Verfahren ein äusserst effektives, effizientes, störungsarmes, Energie-optimiertes, Ressourcen-schonendes, und somit mit äusserst hoher Öko-Effektivität, Kultivieren auch hochwachsender Kulturpflanzen P mit einem regelmässigen und täglichen Output an kultivierten Pflanzen.

Die EP-A-3 257 367 offenbart eine Pflanzenanbauvorrichtung, bei welcher Installationsarbeiten, Reparaturen, Teilverbesserungen oder Umbauarbeiten einfach durchgeführt werden können. Eine Vielzahl von Sämlingsanbaueinheiten sind in Reihe miteinander verbunden. Die Sämlingsanbaueinheit hat ein Gehäuse, dessen beide Enden geöffnet sind. Im Inneren des Gehäuses sind ein Pflanzenschale-Montagesockel, eine Transportvorrichtung, eine Beleuchtungseinheit und eine Wasserversorgungs-/Ablasseinrichtung angeordnet. Die Gehäuse der Sämlingsanbaueinheiten sind miteinander verbunden und bilden so einen durchgehenden zylindrischen Raum. Eine Reihe von Fördereinheiten wird durch die Fördereinrichtungen im Inneren der Gehäuse gebildet. In dem durchgehenden zylindrischen Raum, der durch die Gehäuse gebildet wird, sind Anbauschalen angeordnet, welche in Richtung einer stromabwärtigen Seite durch die Fördereinheit in einem Zustand beweglich sind, in dem die Anzuchtschale über das Gehäuse schreitet. Dabei kann das Gehäuse für junge Setzlinge eine geringere Grösse aufweisen als das Gehäuse für ausgewachsene Setzlinge. Allerdings müssen dazu die Setzlinge von einem Keimtisch in einen anderen Keimtisch umgetopft werden, was einen zusätzlichen, aufwändigen Arbeitsschritt erfordert. Die vorgeschlagene Vorrichtung benötigt auch Kupplungen, um die einzelnen Gehäuse mit den Anschlüssen reversibel aneinander zu kuppeln, wobei solche Kupplungen für einen automatisierten Betrieb störungsanfällig sind. Die Vorrichtung weist eine Anordnung auf, um ganze Gehäuse aus der Pflanzenanbauvorrichtung zu entfernen und wieder einzufügen. Somit sind die Gehäuse, und damit auch die Klimazonen, mobil und nicht statisch angeordnet. Ein Robotersystem, mit welchem einzelne Keimzellen in die Gehäuse eingefügt wieder entnommen werden können - ohne dass die Gehäuse entfernt werden müssen - ist nicht erwähnt. Auch wurde die Pflanzenanbauvorrichtung entwickelt, um in leerstehenden Lagerräumen oder in unterirdischen Tunnelsystemen aufgestellt zu werden. Somit eignet sich die vorgeschlagene Pflanzenanbauvorrichtung nicht für Gewächshäuser mit automatisiertem Pflanzen-Wachstumsbereich. Durch das Verbinden einer Vielzahl von Gehäusen entsteht zudem ein langer durchgehender, tunnelartiger Raum, was wiederum den Luftaustausch innerhalb dieses Raums stark erschwert oder sogar verunmöglicht.

Das Gewächshaus (1)

Das erfindungsgemässe mikroklimatische Gewächshaus (1) ist besonders geeignet zur Kultivierung von Kulturpflanzen P im Bereich der vertikalen Agrarlandwirtschaft. Dabei wird unter dem Begriff mikroklimatisches Gewächshaus (1) ein Gewächshaus mit mindestens zwei voneinander unterschiedlichen Klimazonen (2.1, 2.n) verstanden, deren Klimata individuell und vom Klima ausserhalb des Gewächshauses (1) unabhängig eingestellt werden kann.

Das Gewächshaus (1) umfasst mindestens einen automatisierten Wachstumsbereich (2) mit einer Vielzahl von Keimtischen (3), wobei die Keimtische (3) eine Vielzahl von Setzlingen (4) mindestens einer Kulturpflanze P enthalten. Dabei ist es möglich, dass in einem Gewächshaus (1) nur eine spezifische Kulturpflanze P, d.h. eine Monokultur, kultiviert wird. Dies erlaubt eine Optimierung des Gewächshauses (1) wie auch der Klimazonen für die zu kultivierende Kulturpflanze P. Alternativ können im Gewächshaus (1) auch gleichzeitig verschiedene Kulturpflanzen P, d.h. Mischkulturen, kultiviert werden. Dabei können die verschiedenen Kulturpflanzen P in den gleichen - oder auch unterschiedlichen - Klimazonen kultiviert werden. Auch kann die Anzahl und die Grösse der Klimazonen (2.1, ..., 2.n) gemäss den spezifischen Bedürfnissen gewählt werden, d.h. die Skalierbarkeit des Gewächshauses mit dem automatisierten Wachstumsbereich (2) ist weder nach oben noch nach unten begrenzt.

Die fertig kultivierten Kulturpflanzen P werden nach Ablauf der letzten Wachstumsphase, d.h. Wachstumsdauer Wn, geerntet, d.h. typischerweise die Früchte und/oder Blüten werden vom Rest der Pflanzen getrennt. Diese Trennung, gegebenenfalls auch die Weiterverarbeitung der erhaltenen Produkte sowie deren Verwendung, erfolgt in der Regel auf herkömmliche, typischerweise teil- oder vollautomatisierte, Art und Weise.

Der automatisierte Wachstumsbereich (2) des Gewächshauses (1) umfasst mindestens zwei Klimazonen, d.h. eine erste Klimazone (2.1) und letzte Klimazone (2.n). Oft ist es jedoch vorteilhaft, wenn der Wachstumsbereich (2) auch weitere Klimazonen aufweist, d.h. vorteilhafterweise mindestens eine weitere Klimazone (2.2, ..., 2.n-1), die zwischen der ersten (2.1) und der letzten (2.n) Klimazone angeordnet ist. Dabei bilden die Klimazonen gemeinsam die Klimazonen (2.1, ..., 2.n), wobei die Klimazonen (2.1, ..., 2.n) im automatisierten Wachstumsbereich (2) statisch angeordnet sind und sich in Temperatur T, Belichtung E, relativer Luftfeuchtigkeit RH und/oder Kohlendioxidgehalt ($CO_2$) unterscheiden und somit ein individuelles Klima aufweisen. Dabei wird unter dem Begriff Belichtung E die Beleuchtung der Setzlinge (4) mit einer spezifischen Wellenlänge oder einem ausgewählten Wellenlängenbereich, des von Beleuchtungsmitteln emittierten Lichts, sowie die Belichtungsintensität der Beleuchtungsmittel, d.h. Watt (W) pro m$^2$, verstanden. Der Wachstumsbereich (2) wird automatisiert, insbesondere voll automatisiert, betrieben, d.h. Menschen müssen lediglich zur Revision und/oder zur Reparatur in den Wachstumsbereich (2).

Im automatisierten Wachstumsbereich (2) können die einzelnen Klimazonen (2.1, ..., 2.n) nebeneinander angeordnet sein. Allerdings ist es im Sinne der vertikalen Agrarlandwirtschaft, d.h. vertikale Landwirtschaft, vorteilhaft, wenn zumindest zwei Klimazonen übereinander angeordnet sind. Dabei können die übereinander angeordneten Klimazonen gleich oder unterschiedlich sein und gleiche und/oder unterschiedliche Setzlinge (4) kultivieren.

Erfindungswesentlich ist, dass die Keimtische (3) im automatisierten Wachstumsbereich (2) in den jeweiligen Klimazonen (2.1, ..., 2.n) weniglagig angeordnet sind, d.h. die Keimtische (3) mit den Setzlingen (4) sind einlagig, oder zwei- bis maximal dreilagig übereinander angeordnet. Oft ist jedoch eine einlagige Anordnung bevorzugt, damit die Gasphase in den Klimazonen (2.1, ..., 2.n) keinen Gradienten aufweist. Dabei sind die Keimtische (3) mit den jüngsten Setzlingen (4) der ersten Klimazone 2.1 und die Keimtische (3) mit den ältesten Setzlingen (4) der letzten Klimazone (2.n) zugeordnet.

Ebenfalls erfindungswesentlich ist, dass die Raumhöhe $R_1$ der ersten Klimazone (2.1) kleiner ist als die Raumhöhe $R_n$ der letzten Klimazone (2.n). Dadurch muss ein kleineres Gasvolumen rezykliert werden, wodurch Energie eingespart werden kann, was zu einem effizienteren Betrieb des Gewächshauses (1) führt.

Dabei wurde gefunden, dass bevorzugt die Raumhöhe $R_n$ der letzten Klimazone (2.n) mindestens 20%, insbesondere mindestens 30%, grösser ist als die Raumhöhe $R_1$ der ersten Klimazone (2.1). Alternativ oder zusätzlich weist mindestens eine nachfolgende Klimazone (2.2, ..., 2.n) eine um mindestens 10%, insbesondere eine um mindestens 20%, höhere Raumhöhe R auf als die vorhergehende Klimazone (2.1, ..., 2.n-1), wobei auch zwei oder mehr Klimazonen die gleiche Raumhöhe R aufweisen können. Dabei wird die Raumhöhe R in vertikaler Richtung gemessen.

In einer bevorzugten Ausführungsform umfasst der automatisierte Wachstumsbereich (2) des erfindungsgemässen Gewächshauses (1)

- einen Roboterbereich (2a) sowie einen Kulturbereich (2b) mit den Klimazonen (2.1, ... 2.n),
- je Kulturpflanze P 2 bis 30, insbesondere 3 bis 10, Klimazonen (2.1, ..., 2.n), wobei jede Klimazone (2.1, ...., 2.n) in eine Vielzahl von Tagesparzellen (2c) unterteilt sein kann, und/oder
- dass die Klimazonen (2.1, ..., 2n) für die Kultivierung der gleichen Kulturpflanze P während verschiedenen Wachstumsphasen vorgesehen sind, wobei die Setzlinge (4) in allen Klimazonen (2.1, ..., 2n) den gleichen Keimtischen (3) zugeordnet sind. Dadurch müssen die Setzlinge (4) nicht umgetopft werden, was einen besonders effizienten Arbeitsablauf ermöglicht.

Der Roboterbereich (2a) ist für das Robotersystem (5) mit dem mindestens einen Roboter (5.1) vorgesehen, damit dieser die Keimtische (3) in die erste Klimazone (2.1) einfügen, aus der letzten Klimazone (2.n) die Keimtische (3) und/oder die Keimtische (3) gegebenenfalls von einer Klimazone zur nächsten Klimazone verschieben kann. Der Roboterbereich (2a) kann zudem auch einen Wartungsraum umfassen, welcher zwischen der Aussenhülle des Gewächshauses (1) und dem Kulturbereich (2c) angeordnet ist.

Der Roboterbereich (2a) ist typischerweise zumindest an einer Seite und/oder in der Mitte des Kulturbereichs (2b) angeordnet. In einer bevorzugten Ausführungsform umgibt der Roboterbereich (2a) den Kulturbereich (2b) an mindestens drei, insbesondere an allen, Seiten. Dadurch werden allfällige, von der Kultivierung der Pflanzen P herrührende Geruchsemissionen aus dem Kulturbereich (2c) nicht nur durch den Gasaustausch in den Klimazonen (2.1, ... 2.n) mittels Haustechnik (6), sondern auch durch eine zusätzliche Reinigung der Gasphase des Roboterbereichs (2a) entfernt. Dadurch wird die Wahrscheinlichkeit weiter reduziert, dass unerwünschte Gerüche aus dem Gewächshaus (1)

5

in die Aussenwelt gelangen.

Der Kulturbereich (2b) umfasst die Klimazonen (2.1, ... 2.n). Somit werden im Kulturbereich (2b) die Kulturpflanzen P - und somit die Setzlinge (4) - kultiviert.

Weist der automatisierte Wachstumsbereich (2) einen Roboter- (2a) und einen Kulturbereich (2b) auf, so weist vorteilhafterweise der Kulturbereich (2b) mit den zu kultivierenden Setzlingen (4) im Vergleich zum Roboterbereich (2a) einen Überdruck von beispielsweise 0.1 mbar auf. Zudem weist der Rotoberbereich (2a) im Vergleich zum Aussenbereich des automatisierten Wachstumsbereich (2) bevorzugt einen Überdruck auf. Dabei kann der Überdruck ebenfalls ca. 0.1 mbar betragen. Dadurch werden die zu kultivierenden Setzlinge (4) doppelt vor dem Eindringen von Schädlingen und weiteren unerwünschten Objekten, wie beispielsweise Pilze, Bakterien, Pollen und/oder Viren, geschützt.

Während der Kultivierung der Kulturpflanzen P durchlaufen diese typischerweise 2 bis 30, insbesondere 3 bis 10, Klimazonen (2.1, ..., 2.n). Mit anderen Worten: Ist der Wachstumsbereich (2) des Gewächshauses (1) auf die Kultivierung einer Sorte Kulturpflanze P, d.h. einer Art von Setzling (4), ausgelegt, umfasst der Wachstumsbereich (2) - und somit der Kulturbereich (2b) - typischerweise 2 bis 30, insbesondere 3 bis 10, Klimazonen (2.1, ..., 2.n). Dabei ist es in der Regel hilfreich, wenn die Klimazonen (2.1, ..., 2.n) jeweils die gleiche Grundfläche aufweisen und somit die gleiche Anzahl an Keimtische (3) mit Setzlingen (4) aufnehmen können, wobei in diesem Fall bevorzugt auch die Verweildauer der Keimtische (3) mit Setzlingen (4) in den einzelnen Klimazonen (2.1, ..., 2.n) gleich ist.

In einer Ausführungsform weisen die Klimazonen (2.1, ...., 2.n) keine Unterteilungen auf und bilden somit einen gemeinsamen Raum. Dabei weisen die Klimazonen (2.1, ...., 2.n) typischerweise einen Eingang und einen Ausgang auf, wobei der Eingang und der Ausgang identisch sein können. In einer anderen Ausführungsform ist jeweils eine Klimazone (2.1, ..., 2.n) in eine Vielzahl von - typischerweise gleich grossen - Tagesparzellen (2c) unterteilt. Dabei kann eine Tagesparzelle (2c) ein in sich abgeschlossenes Modul bilden, wobei eine Seite - oder zwei einander gegenüberliegende Seiten - offen resp. verschliessbar sind zur Aufnahme und Abgabe der Keimtische (3) mit den Setzlingen (4). Die anderen Seiten bilden eine feste Abgrenzung zu den benachbarten Tagesparzellen (2c). Alternativ weist jede Tagesparzelle (2c) zwar einen eigenen Eingang und Ausgang auf, wobei eine einzelne Tagesparzelle (2c) keine separaten Seitenwände zur benachbarten Tagesparzelle (2c) aufweist. Dadurch erstreckt sich die gemeinsame Gasphase über alle aneinander angrenzenden Tagesparzellen (2c). Dabei weist jede Tagesparzelle (2c) im Wesentlichen einen separaten Boden mit gegebenenfalls individueller Zufuhr von Wasser/ Nährlösung (4.1). Zudem kann bei dieser Ausführungsform jede Tagesparzelle (2c) individuelle Bewegungsmittel (12) aufweisen, mit welchen die Keimtische (3) mit den Setzlingen (4) in die und aus der Tagesparzelle (2c) befördert werden.

Eine Tagesparzelle (2c) kann einen Keimtisch (3) oder eine Vielzahl - beispielsweise zwei bis 50, insbesondere 4 bis 20 - Keimtische (3) aufnehmen. Dabei beinhaltet eine Tagesparzelle (2c) die Keimtische (3) mit Setzlingen (4), welche am gleichen Tag gepflanzt resp. gesteckt oder gesetzt wurden. Dadurch weisen alle Setzlinge (4) in einer Tagesparzelle (2c) das gleiche Alter auf.

Die Tagesparzellen (2c) weisen typischerweise auf der zur Roboterzone (2a) befindlichen Seite eine schliessbare Öffnung auf. Durch diese werden die Keimtische (3) mit den Setzlingen (4) in die Tagesparzellen (2c) ein- und wieder herausgeführt. Die schliessbare Öffnung kann als Türe, Tor, Sektionaltor und/oder in Form von Lamellen oder eines Rollsystems ausgeführt sein. Der Fachmann kennt geeignete schliessbare Öffnungen und kann die optimale Auswahl treffen.

Wird eine oder mehrere Klimazonen (2.1, ..., 2.n) in kleinere Einheiten, beispielsweise in Tagesparzellen (2c), unterteilt, kann die Gasmenge, welche pro Flächen- und Zeiteinheit ausgetauscht werden muss, reduziert werden. Demzufolge reduziert sich die Gasmenge, welche zuvor konditioniert, d.h. welche gekühlt oder aufgewärmt, befeuchtet und gegebenenfalls mit $CO_2$ angereichert, werden muss. Demzufolge ist auch die Gasmenge, welche aus der Tagesparzelle (2c) austritt, geringer, d.h. es muss ein kleineres Gasvolumen wieder aufbereitet werden. Dies erlaubt u.a. eine wesentlich effizientere Wärmerückgewinnung und Wasserkondensation. Zudem muss ein kleineres Gasvolumen umgewälzt werden, wodurch die Lüftung kleiner dimensioniert und somit sparsamer betrieben werden kann.

In einer weiteren bevorzugten Ausführungsform des Gewächshauses (1) sind die erste Klimazone (2.1) und die letzte Klimazone (2.n) nebeneinander oder übereinander und die gegebenenfalls weiteren Klimazonen (2.2, ..., 2.n-1) neben und/oder unterhalb der ersten Klimazone (2.1) und neben und/oder oberhalb der letzten Klimazone (2.n) angeordnet. Alternativ oder zusätzlich weisen die Klimazonen (2.1, 2.2, ..., 2.n) einen Eingang E und einen Ausgang A auf, wobei

- die Klimazonen (2.1, ..., 2.n) und/oder die Keimtische (3) Bewegungsmittel (12) aufweisen, um die Keimtische (3) innerhalb einer Klimazone (2.1, ..., 2.n) vom Eingang E zum Ausgang A bewegen zu können, oder
- die Keimtische (3) innerhalb einer Klimazone (2.1, ..., 2.n) stationär angeordnet sind.

Dabei ist besonders bevorzugt, dass die Klimazonen (2.2, ..., 2.n-1) vertikal übereinander angeordnet, wobei die erste Klimazone (2.1) die oberste Klimazone ist. Dadurch werden die leichtesten Keimtische (3) mit den jüngsten Setzlingen (4) in der oder den obersten Etagen des vertikalen Wachstumsbereichs (2) und die schwersten Keimtische (3) mit den ältesten Setzlingen (4) in der oder den untersten Etagen des Wachstumsbereichs (2) angeordnet. Dadurch werden die im Laufe der Kultivierung schwerer werdenden Keimtische (3) mit den Setzlingen (4) von Klimazone zu Klimazone nach unten befördert, was energiesparender ist als umgekehrt.

Die Klimazonen (2.1, ..., 2.n) weisen einen Eingang E und einen Ausgang A auf, um die Keimtische (3) mit den Setzlingen (4) in die Klimazonen einzufügen. Dabei können der Eingang E und der Ausgang A identisch oder verschieden sein, d.h. die Keimtische (3) mit den Setzlingen (4) können entweder durch einen Eingang E in die Klimazone eingefügt und an einem, vom Eingang E unterschiedlichen Ausgang A aus der Klimazone wieder entnommen werden. Diese Anordnung ist insbesondere bei grossen, zusammenhängenden Klimazonen ohne einzelne Tagesparzellen (2c) vorteilhaft. Sind die Klimazonen (2.1, ..., 2.n) jedoch in einzelne Tagesparzellen (2c) unterteilt, ist der Eingang E und der Ausgang A bevorzugt miteinander identisch.

In einer besonders bevorzugten Ausführungsform des Gewächshauses (1) weisen die Klimazonen (2.1, ..., 2.n) - und sofern vorhanden auch die Tagesparzellen (2c) - zur Kultivierung der Kulturpflanzen P, und somit der Setzlinge (4),

- Beleuchtungsmittel zur individuellen Belichtung der Keimtische (3) - und somit der Setzlinge (4), auf, wobei als Beleuchtungsmittel bevorzugt LED-Lampen eingesetzt werden. Somit kann die Tageslänge und das Tageslicht optimal simuliert werden. Dadurch benötigt der automatisierte Wachstumsbereich (2) keine Fenster und der Wärmeverlust der Gebäudehülle wird insbesondere im Winter reduziert;
- Eine Wasser- und Nährstoffzufuhr, insbesondere mittels Sprühnebel, Wasserschlauch mit Tropfsystem und/oder Fluttisch auf. Dabei erfolgt die Wasser- und Nährstoffzufuhr oft gemeinsam, d.h. die Nährstoffe sind im Wasser gelöst und werden als Nährstofflösung dosiert. Bevorzugte optimale Nährstoffzusammensetzungen können je nach zu kultivierende Kulturpflanze P ändern. Geeignete Nährstofflösungen sind dem Fachmann bekannt und im Handel erhältlich;
- Ein Belüftungssystem mit Gaseinlass und Gasauslass auf. Das Belüftungssystem wird typischerweise durch die Haustechnik (6) reguliert und angetrieben. Gleiches gilt für den Gaseinlass und Gasauslass; und/oder
- Ein Sensorsystem auf, umfassend mindestens einen Sensor zur Bestimmung der Temperatur, d.h. Temperatur-Sensor, relativen Luftfeuchtigkeit, d.h. Luftfeuchtigkeits-Sensor, Gesundheit der Pflanzen, d.h. Pflanzen- und/oder Farb-Sensor, beispielsweise aufgrund der Blattfarbe, des Drucks, d.h. Druck-Sensor, $CO_2$-Gehalts, $O_2$-Gehalts, d.h. Gassensor zur Bestimmung einzelner Gase, beispielsweise in Form eines IR-Sensors, pH-Wert, d.h. pH-Wert Sensor, einzelne Nährstoffkomponenten, beispielsweise in Form eines Ionen-Sensors und/oder zur Bestimmung der elektrischen Leitfähigkeit der Nährlösung, d.h. Leitfähigkeits-Sensor, Art und Intensität der Beschallung, d.h. Schall-Sensor, und/oder Sensoren zur Überprüfung von Schädlingen, der Blätter und/oder Blüten der Setzlinge (4). Dabei umfasst das Sensorsystem bevorzugt auch entsprechende Regler zur Dosierung resp. zur Einstellung des jeweiligen Parameters. So hat sich für das Wachsen der Kulturpflanzen P beispielsweise besonders vorteilhaft herausgestellt, wenn die Pflanzen gleichzeitig einer erhöhten Temperatur von beispielsweise +5°C, und erhöhtem $CO_2$-Gehalt ausgesetzt sind;

auf. Die Klimazonen (2.1, ..., 2.n) können zudem auch ein Beschallungssystem - beispielsweise in Form von Lautsprechern - aufweisen, zur Beschallung der heranwachsenden Setzlinge (4), um deren Wachstum zu optimieren.

Dabei kann die Belichtung E mit den Beleuchtungsmitteln jeweils optimal auf die Anforderungen der jeweiligen Klimazone (2.1, ..., 2.n), wie Belichtungsdauer, Wellenlänge des emittierten Lichts sowie Belichtungsintensität, d.h. Watt (W) pro m$^2$, eingestellt werden. Beispielsweise kann - je nach Klimazone - die Belichtungsdauer zwischen 12 und 18 Stunden pro 24-Stunden Tag, die Wellenlänge des emittierten Lichts für bläuliches Licht, beispielsweise für die Vegetationszone in der ersten Klimazone (2.1) 400-500 nm, für rötliches Licht, beispielsweise in generativen Phasen in nachfolgenden Klimazonen, 620-780 nm oder 700 nm bis 1 mm, und die Belichtungsintensität 200-300 W/m$^2$, 400-500 W/m$^2$ oder 600-700 W/m$^2$, betragen. Zur Belichtung werden bevorzugt LED-Lampen eingesetzt.

Zudem ist es möglich die verschiedenen Klimazonen alternierend zu belichten, wodurch elektrischer Strom gleichmässiger verbraucht und Stromspitzen gebrochen werden. Da die Beleuchtung Wärme generiert, erfolgt demzufolge auch alternierende die Wärmerückgewinnung aus der Abluft. Letztere erfolgt typischerweise gleichzeitig mit der Wasserrückgewinnung, d.h. Kondensation von Wasser aus der Abluft.

Die Beleuchtungselemente zur Belichtung der Setzlinge (4) werden bevorzugt auf die für die jeweilige Wachstumsphase optimale Höhe eingestellt, wodurch die Belichtungsintensität, d.h. die Anzahl Watt (W) pro m$^2$, mit leistungsschwächeren Lampen optimiert werden kann. Dadurch wird die Gasphase nicht durch eine zu hohe Wattleistung unnötig aufgeheizt, wodurch wiederum weniger Wärme abgeführt und rezykliert werden muss. Dies erhöht weiter die Energie-Effizienz des erfindungsgemässen Gewächshauses (1) signifikant.

Die aus den Klimazonen (2.1, ..., 2.n) austretende Gasphase tritt durch den Gasauslass aus und kann in einer anderen Klimazone mit beispielsweise niedrigerem $CO_2$-Bedarf direkt wiederverwendet oder wird typischerweise durch die Haustechnik (6) aufbereitet, sodass ein möglichst grosser Teil rezykliert werden kann.

Dabei weist das Belüftungssystem typischerweise Ventilatoren und/oder Gebläse auf, welche die Gaszirkulation ermöglichen. In einer Ausführungsform sind in den einzelnen Klimazonen (2.1, ..., 2.n), wie auch gegebenenfalls in den Tagesparzellen (2c), auch kleinere Ventilatoren angeordnet, welche die Gaszirkulation innerhalb den Klimazonen resp. Tagesparzellen (2c) optimieren.

Die Setzlinge (4) in den einzelnen Klimazonen (2.1, ..., 2.n) - oder ein Teil davon - können auch beschallt werden. Die Beschallung erfolgt bevorzugt während der Belichtung der Setzlinge (4), beispielsweise mit einer Lautstärke von 72 dB und 74 Schläge pro Minute (beats per minute; BPM), wobei eine musikalische Beschallung bevorzugt wird. Dabei weiss der Fachmann, den Rhythmus, das Tempo, die Tonhöhe, sowie die Sinustönen ausgewählter Frequenzen, optimal einzustellen. Zudem ist es vorteilhaft, wenn die Lautsprecher zur Beschallung der Setzlinge (4) mindestens 20 cm, bevorzugt mindestens 30 cm, oberhalb der Setzlinge (4) angebracht ist, wobei zur Bestimmung des Abstands der Setzlinge (4) zu den Lautsprechern die durchschnittliche Grösse der Setzlinge (4) am Ende der Wachstumsphase der jeweiligen Klimazone (2.1, ..., 2.n) hinzugezogen wird. Es wird vermutet, dass eine solche Beschallung biologische Prozesse im Setzling (4) anregt resp. begünstigt.

In einer weiteren Ausführungsform weisen ausgewählte Klimazonen (2.1, ..., 2.n) resp. Tagesparzellen (2c) eine Rüttelfunktion auf, mit welcher die blühenden Pflanzen gerüttelt werden können, um benachbarte Blüten zu bestäuben. Alternativ kann der Roboter (5.1) die Keimtische (3) schütteln, um die Bestäubung der Setzlinge (4) zu veranlassen.

In einer anderen Ausführungsform werden seitliche Wände der Klimazonen (2.1, ..., 2.n) resp. der Tagesparzellen (2c) mit Photovoltaik-Modulen ausgestattet, um einen Teil des Lichts wieder in Elektrizität zu verwandeln. Dies reduziert den Strombedarf und erhöht die Betriebseffizienz des Gewächshauses (1).

In einer weiteren Ausführungsform werden die einzelnen Klimazonen (2.1, ..., 2.n) resp. der Tagesparzellen (2c) mittels Dämmmaterial gedämmt, um eine gute akustische Dämmung und keinen Wärmestau zu erhalten. Letzteres erlaubt eine bessere Temperaturregulierung innerhalb der Klimazone resp. der Tagesparzelle.

In einer Ausführungsform umfasst eine Klimazone (2.1, ..., 2.n) beispielsweise 8 bis 200 oder mehr, bevorzugt 16 bis 100, insbesondere 16 bis 50, Keimtische (3). In einer anderen Ausführungsform umfasst eine Klimazone (2.1, ..., 2.n) beispielsweise 3 bis 50 oder mehr, bevorzugt 5 bis 25, insbesondere 8 bis 20, Tagesparzellen (2c). In einer weiteren Ausführungsform umfasst eine Tagesparzelle (2c) beispielsweise 1 bis 50 oder mehr, bevorzugt 1 bis 30, insbesondere 2 bis 20, Keimtische (3). Dabei können auch mehrere Klimazonen (2.1, ..., 2.n) mit dem gleichen Klima gleicher oder unterschiedlicher Grösse neben- und/oder übereinander angeordnet sein.

Die Grösse der Keimtische (3) kann individuell gewählt werden und ist typischerweise abhängig von der Art der zu kultivierenden Kulturpflanze. So benötigt beispielsweise eine heranwachsende Reispflanze wesentlich weniger Platz als eine heranwachsende Tomatenpflanze. Dies wiederum hat einen Einfluss auf die Anzahl Setzlinge, welche in einem Keimtisch (3) angeordnet werden können. Vorteilhafterweise können die Keimtische (3)

- mindestens 4 Setzlinge (4);
- bis zu 512, bevorzugt bis zu 128, insbesondere bis zu 64 Setzlinge (4); und/oder
- 9 bis zu 128 Setzlinge (4) pro $m^2$, insbesondere 9 bis zu 64 Setzlinge (4) pro $m^2$

aufnehmen. Alternativ - oder zusätzlich - entspricht die vertikale Höhe der seitlichen Begrenzung der Keimtische (3) maximal 50%, insbesondere maximal 20%, der Raumhöhe $R_1$ der ersten Klimazone (2.1). Dies erlaubt einen optimalen Gasaustausch, auch innerhalb der nach oben offenen Keimtische (3).

Die Keimtische (3) können in Form einer Wanne vorliegen, in welcher das Nährmedium (4.1) mit den Setzlingen (4) angeordnet ist. In dieser Ausführungsform weisen die Keimtische (3) einen Boden auf und die Setzlinge (4) können durch eine im Boden oder oberhalb des Bodens angeordnete Anordnung - beispielsweise ein «Plant Holder» und/oder Gitter - gehalten resp. fixiert werden. In einer anderen Anordnung weisen die Keimtische (3) lediglich ein - typischerweise planares - Gitter auf, wobei die Setzlinge (4) durch die Gitteröffnung fixiert werden. Unterhalb des Keimtisches (3) wachsen die Wurzeln und oberhalb des Keimtisches (3) der Stiel, die Blätter und die Blüten der Kulturpflanze P. Ein solcher Keimtisch (3) mit Setzling (4) wird dann typischerweise in den Klimazonen (2.1, ..., 2.n) - vorteilhafterweise in darin angeordneten Tagesparzellen (2c) - auf eine darin fest angeordnete Wanne gelegt. Diese Anordnung erlaubt ein selektives Besprühen der Wurzeln mittels Nährlösung, d.h. beispielsweise mittels Aeroponic.

In einer bevorzugten Ausführungsform

- werden die Setzlinge (4) in Form von Pflanzensamen, Pflanzensetzlingen und/oder Pflanzenstecklingen in die Keimtische (3) eingebracht. Dabei wird unter dem Begriff Setzling (4) erfindungsgemäss auch Samen und Steckling verstanden, unabhängig ob der Setzling in Form eines Samens, Setzlings oder Stecklings frisch in den Keimtisch (3) gegeben wurde, oder ob die zu kultivierende Kulturpflanze P schon ausgewachsen in der letzten Klimazone (2.n) bereit zur Ernte ist. Dabei spielt es auch keine Rolle, ob sich der Setzling (4) lediglich in einer wässrigen Nährlösung oder in einem festen Nährmedium wie beispielsweise Erde befindet;

- enthalten die Keimtische (3) ein Nährmedium (4.1), in welchem die Setzlinge (4) eingebettet sind; und/oder
- sind die Kulturpflanzen P, d.h. die zu kultivierenden Setzlinge (4), C3- und/oder C4-Pflanzen, insbesondere Tomaten, Chili, Paprika, Kartoffel, Reis, Mais, Zuckerrohr, Amarant, Hirse, Raps, Getreide und Eiweisspflanzen wie Weizen, Roggen, Gerste, Hafer, Dinkel, Hirse, Sojabohnen, Greeny Leaves wie Salate und Pak Choi, Kräuter wie Oregano, Krokusse wie Safran, aber auch Kaffee, Mohn, Pilze, tropische/exotische Pflanzen wie beispielsweise die Passionsfrucht (Maracuja) und/oder Cannabis, insbesondere medizinisches THC-haltiges, THC-freies Cannabis und/oder CBD-haltiges Cannabis.

In einer Ausführungsform werden die Setzlinge (4) in sogenannte Trays eingebracht, wobei die Trays ein Bruchteil der Grösse der Keimtische (3) aufweisen, wobei die Trays bevorzugt eine flächige Form, beispielsweise ein Gitter, aufweisen. Weist ein Tray beispielsweise ein Viertel einer Keimtischgrösse auf, können insgesamt vier Trays in einen Keimtisch platziert werden. Dies erlaubt eine einfachere Handhabe der Setzlinge (4), insbesondere der kultivierten, ausgewachsenen Setzlinge (4).

Das Gewächshaus (1) umfasst neben dem automatisierten Wachstumsbereichs (2) auch das Robotersystem (5) mit mindestens einem Roboter (5.1) und eine Haustechnik (6) zum Einstellen der individuellen Klimata sowie zum Austauschen der Gasphase in den Klimazonen (2.1, ..., 2.n). Zudem umfasst das Gewächshaus (1) bevorzugt auch einen Bestückungs- und Kontrollbereich (7) zur Bestückung der Keimtische (3) mit Setzlingen (4), einen Ernte- und Aufbereitungsbereich (8) zur Ernte und Aufbereitung der kultivierten, d.h. ausgewachsenen, Kulturpflanzen P, mindestens einen Schleusenbereich (9), einen Verarbeitungs- und/oder Abpackbereich (10) und/oder mindestens einen Scan- und Mess-Bereich (11).

Das Robotersystem (5) des automatisierten Wachstumsbereichs (2) mit mindestens einem Roboter (5.1) zum Einfügen der Keimtische (3) in die erste Klimazone (2.1) und/oder zur Entnahme der Keimtische (3) aus der letzten Klimazone (2.n) ist typischerweise in der Roboterzone (2a) des Wachstumsbereichs (2) angeordnet. Je nach Arbeitsweise des automatisierten Wachstumsbereichs (2) dient der mindestens eine Roboter (5.1) auch zur Entnahme der Keimtische (3) mit den Setzlingen (4) aus einer ersten Klimazone, beispielsweise der ersten Klimazone (2.1), und zum Einfügen in die nächste, d.h. in eine weitere, Klimazone (2.2, ..., 2.n-1), resp. in die letzte Klimazone (2.n). Entnimmt der Roboter (5.1) einen Keimtisch (3) mit den kultivierten Kulturpflanzen P aus der letzten Klimazone (2.n) des Wachstumsbereichs (2), leitet er den Keimtisch (3) mit dem ausgewachsenen Setzling (4) weiter zur Ernte und Verarbeitung des Setzlings (4).

Der Roboter (5.1) kann beispielsweise in Form einer Art Hubstapler oder Hebebühne sein, welcher sich auf der untersten Etagenebene des Wachstumsbereichs (2) bewegt und die Keimtische (3) mit den Setzlingen (4) an jeder benötigten Stelle absetzen und wieder abholen kann. In einer anderen Ausführungsform ist der Roboter (5.1) ein selbstfahrender Keimtisch (3), wodurch sich der Keimtisch (3) selbständig bewegen kann. In einer weiteren Ausführungsform weist das Robotersystem (5) neben dem mindestens einen Roboter (5.1) ein zwei- oder dreidimensionales Robotik-Grid (5.2) auf, anhand welchem sich der Roboter (5.1) selbständig bewegen oder geführt werden kann.

Ist das Robotik-Grid (5.2) zweidimensional, d.h. 2-D, weist das Robotersystem (5) typischerweise ein vertikal angeordneter Aufzug auf, mit welchem einzelne planare, d.h. 2-dimensionale, Grid-Flächen (5.2) miteinander verbunden sind. Dabei kann sich der Roboter (5.1) selbst mit dem Aufzug und einem Keimtisch (3) mit Setzlingen (4) mittels Aufzug von Grid-Fläche (5.2) zu Grid-Fläche (5.2) bewegen, oder der Roboter (5.1) bleibt auf der entsprechenden Grid-Fläche (5.2) und verschiebt lediglich den Keimtisch (3) mit den Setzlingen (4) auf den Aufzug. Alternativ bildet das 2-D Robotik-Grid (5.2) den Aufzug, welcher jeweils die Eingänge resp. Ausgänge der einzelnen Klimazonen - und somit die einzelnen Etagen - miteinander verbindet.

Ist das Robotik-Grid (5.2) dreidimensional, d.h. 3-D, kann ein Roboter (5.1) einen Keimtisch (3) mit Setzlingen (4) von jedem Ort, welcher mit dem 3-D Robotik-Grid (5.2) verbunden ist, zu jedem anderen Ort des 3-D Robotik-Grids (5.2) verschieben. In dieser Ausführungsform werden beispielsweise wenige Roboter (5.1) - gegebenenfalls nur ein Roboter (5.1) - benötigt. In einer solchen, bevorzugten Ausführungsform ist der Roboter (5.1) oberhalb der obersten Klimazone angeordnet und kann die Keimtische (3) mit den Setzlingen (4), welche aus der jeweiligen Klimazone in das 3-D Robotik-Grid (5.2), typischerweise mit Hilfe von Bewegungsmittel (12), gelangen, von oben greifen und seitlich und/oder horizontal verschieben. Werden die Keimtische (3) vertikal verschoben, können beispielsweise seitliche Führungsschienen des 3-D Robotik-Grid (5.2) eingeklappt werden, wodurch sich die Keimtische (3) beliebig vertikal - beispielsweise mittels Seilwinde - verschieben lassen. Dabei kann der Roboter (1) statisch angeordnet sein, insbesondere wenn die Klimazonen (2.1, ..., 2.n) einen Eingang und einen Ausgang besitzen. Sind die Klimazonen (2.1, ..., 2.n) in Tagesparzellen (2c) unterteilt, ist es vorteilhaft, wenn der Roboter (5.1.) oberhalb der jeweiligen, typischerweise übereinander angeordneten Ein-/ Ausgängen der Tagesparzellen (2.c) geführt wird.

Das 3-D Robotik Grid (5.2) kann bei geeigneter Ausführung zudem auch als Wartungszugang zur Wartung der Klimazonen (2.1, ... 2.n), insbesondere wenn sie in Tagesparzellen (2c) unterteilt sind, verwendet werden.

Das Robotersystem (5) umfasst zudem typischerweise eine Ladestation (5.3), um den Akku des Roboters (5.1) periodisch aufzuladen.

Geeignete Robotersysteme (5) mit Roboter (5.1) sind dem Fachmann bekannt. Er kann auch das optimale Robotersystem (5) für den jeweils spezifischen automatisierten Wachstumsbereich (2) auswählen.

Die Haustechnik (6) des automatisierten Wachstumsbereichs (2) dient zum Einstellen von individuellen Klimata sowie zum Austauschen der Gasphase in den Klimazonen (2.1, ..., 2.n). Die Haustechnik (6) umfasst Ventilatoren und/oder Gebläse, mit welchen die Gasphase in die Klimazonen (2.1, ..., 2.n) ein- und wieder herausgeführt wird. Damit wird nicht nur die jeweilige Gasphase umgewälzt, sondern es wird bevorzugt auch ein Überdruck im automatischen Wachstumsbereich (2) erzeugt. Damit wird verhindert, dass u.a. unerwünschte Schädlinge, Pilze, Bakterien, Pollen und/oder Viren in den Wachstumsbereich (2) gelangen. Zudem stellt die Haustechnik (6) auch die Temperatur, Luftfeuchtigkeit und gegebenenfalls die $CO_2$-Konzentration der Gasphase ein, welche in die einzelnen Klimazonen (2.1, ..., 2.n) eingeführt wird. Und die austretende Gasphase wird wieder aufbereitet, d.h. in den Klimazonen entstandene Wärme entzogen, Wasser kondensiert, die Gasphase gegebenenfalls gefiltert und/oder neues $CO_2$ hinzugefügt und anschliessend typischerweise wieder rezykliert. Die Haustechnik (6) regelt zudem - beispielsweise mit Hilfe von Sensoren - die weiteren Einstellungen wie Art und Menge der benötigten Nährlösung; Intensität, Dauer und gegebenenfalls Wellenlängenbereich des benötigten Lichts; sowie weitere Parameter, die eingestellt werden können.

Die Haustechnik (6) konditioniert die Gasphase, welche mittels Belüftungssystem via Gaseinlass in die Klimazonen (2.1, ..., 2.n) eingeführt wird. Dabei wird - je nach Klimazone und zu kultivierende Pflanze - die Temperatur, beispielsweise auf 25°C oder 30°C, die relative Luftfeuchtigkeit, beispielsweise auf 75%, 70%, 65%, 60% oder 55%, sowie gegebenenfalls den $CO_2$ - Gehalt, beispielsweise von ca. 400 ppm (Raumluft) auf 1'500 ppm $CO_2$, eingestellt. Zudem kann die Gasphase vor dem Gaseinlass und gegebenenfalls nach dem Gasauslass beispielsweise UV-C Strahlen ausgesetzt werden, um allfällige Schädlinge wie Bakterien, Viren oder Pilzsporen abzutöten und somit die Gasphase zu desinfizieren.

In einer bevorzugten Ausführungsform der Haustechnik (6) umfasst diese auch eine Installationszone, insbesondere eine vertikale, d.h. Steigzone, und gegebenenfalls auch horizontale Installationszone, in welcher Zu- und Ableitungen wie Strom, Wasser und/oder Nährlösung (4.1) von und zu den Klimazonen (2.1, ..., 2.n), beispielsweise den Tagesparzellen (2c) geführt werden.

Neben dem automatisierten Wachstumsbereich (2) umfasst das erfindungsgemässe Gewächshaus (1) bevorzugt auch

- einen Bestückungs- und Kontrollbereich (7) zur Bestückung und Kontrolle der Keimtische (3) mit Setzlingen (4). Dabei kann der Bestückungs- und Kontrollbereich (7) auch einen Setzlingsbereich umfassen, in welchem die Keimtische (3) mit den frisch gesäten, gepflanzten und/oder gesteckten Setzlinge (4) ohne Naturlicht während den ersten Tagen kultiviert werden können, was eine einfache Überprüfung der Stecklinge (4) und bei Bedarf ein schneller manueller Zugriff erlaubt;
- einen Ernte- und Aufbereitungsbereich (8) zur Ernte und Aufbereitung der gewachsenen Pflanzen sowie zur Wartung und Aufbereitung der Keimtische, wobei sich der Ernte- und Aufbereitungsbereich (8) sowie der Bestückungs- und Kontrollbereich (7) im gleichen Raum befinden können, oder als getrennte Räume angeordnet sein können;
- mindestens einen Schleusenbereich (9), insbesondere einen ersten Schleusenbereich (9.1) zwischen dem Bestückungs- und Kontrollbereich (7) und dem Wachstumsbereich (2) und/oder einen zweiten Schleusenbereich (9.2) zwischen dem Wachstumsbereich (2) und dem Ernte- und Aufbereitungsbereich (8). Dabei können die Schleusenbereiche (9.1, 9.2) miteinander identisch oder voneinander getrennt sein, wobei die Schleusenbereiche (9.1, 9.2) bevorzugt eine schliessbare Öffnung aufweisen. Dabei weist der Wachstumsbereich (2) einen - im Vergleich zum Bestückungs- und Kontrollbereich (7) resp. zum Ernte- und Aufbereitungsbereich (8) - einen Überdruck auf. Dadurch können keine Schädlinge in den Wachstumsbereich (2) eindringen; sowie
- gegebenenfalls einen Verarbeitungs- und/oder Abpackbereich (10) zur Weiterverarbeitung der geernteten Pflanzen aufweist. Der Verarbeitungs- und/oder Abpackbereich (10) kann mit dem Ernte- und Aufbereitungsbereich (8) verbunden sein und auch beispielsweise einen Trocknungsbereich zur Trocknung der geernteten Setzlinge (4) aufweisen.

Die spezifische Ausstattung des Bestückungs- und Kontrollbereichs (7), des Ernte- und Aufbereitungsbereichs (8) sowie des Verarbeitungs- und/oder Abpackbereichs (10) sind dem Fachmann bekannt. Sie können sich auch je nach zu kultivierende und zu erntende Kulturpflanze P voneinander unterscheiden. Sie können voll- oder teilautomatisiert betrieben werden. Es ist jedoch auch möglich, die jeweiligen Arbeiten in den Bereichen (7), (8) und/oder (10) ganz oder zumindest vorwiegend durch Personen durchzuführen, wobei die Keimtische (3) - oder Teile davon - und/oder Setzlinge (4) beispielsweise mit einem Rollen-Fördersystem von Arbeitsplatz zu Arbeitsplatz und von Bereich (7), (8), (10) zu Bereich (7), (8), (10) verschoben werden können. Dabei ist es jedoch äusserst hilfreich, wenn auch diese Bereiche erhöhte Reinheitsanforderungen erfüllen und die darin arbeitenden Personen entsprechende Schutzkleidung tragen. Durch diese Anordnung kann zumindest der Wachstumsraum (2) und gegebenenfalls auch die Bereiche (7), (8) und/oder (10) als GMP- und/oder GACPzertifizierte, keimfreie Reinräume ohne unerwünschte Schädlinge betrieben werden. Demzufolge werden im Wachstumsraum (2) auch keine Pestizide und Fungizide benötigt, was äusserst vorteilhaft ist - insbesondere bei Pflanzen und Früchten, welche anschliessend konsumiert werden.

Gemäss vorliegender Erfindung kann das erfindungsgemässe Gewächshaus (1) auch mindestens einen Scan- und Mess-Bereich (11) zum Scannen, Fotografieren und Messen der Setzlinge (4) aufweist, wobei bevorzugt mindestens ein Scan- und Mess-Bereich (11) vor, innerhalb oder nach dem Schleusenbereich (9), und/oder vor oder nach jeder Klimazone (2.1, ..., 2.n) angeordnet ist. So können beispielsweise bei jedem Verschieben eines Keimtisches (3) mit Setzlingen (4) - typischerweise mit einem Roboter (5.1) des Robotersystems (5) - die Setzlinge (4) gescannt werden. Dabei kann auf einfache Art und Weise automatisiert überprüft werden, wie sich die Setzlinge (4) entwickeln. Zudem können diese auf einen allfälligen Befall von Schädlingen untersucht werden und so Schädlinge frühzeitig erkannt werden. Ausserdem ist das Scannen und Messen der Setzlinge (4) vor und während dem Kultivieren für das Optimieren der einzelnen Parameter in den Klimazonen äusserst hilfreich, wodurch das Wachstum beschleunigt und die Verweildauer der Pflanzen in den Klimazonen verkürzt werden kann. Auch kann der Reifegrad von Früchten auf einfache Art regelmässig überprüft werden. Die beim Scannen und Messen erhaltenen Daten können in einem Kultivierungsarchiv gespeichert werden. Anhand dieser Daten und mittels Deep-Learning, Machine-Vision System und/oder künstlicher Intelligenz (AI) können die Verfahrensparameter zur Kultivierung der Setzlinge (4) weiter optimiert werden. Somit wird durch den Einsatz des Scan- und Mess-Bereichs (11) die Kultivierung, d.h. die Produktion, der Setzlinge (4) durch eine Forschungs- und Entwicklungsmodul erweitert, da der Einfluss einzelner Paramater auf das Wachstum der Setzlinge (4) genau nachverfolgt und optimiert werden kann.

Das Verfahren

Beim erfindungsgemässen Verfahren zum Kultivieren von Kulturpflanzen P im erfindungsgemässen mikroklimatischen Gewächshaus (1)

i) werden die Keimtische (3) mit einer Vielzahl von Setzlingen (4) bestückt und die Keimtische (3), gegebenenfalls mittels Roboter (5.1) des Robotersystems (5), in die erste Klimazone (2.1) des Wachstumsbereichs (2) eingefügt. Bevorzugt erfolgt das Bestücken im Bestückungs- und Kontrollbereich (7) und die Keimtische (3) mit den Setzlingen (4) werden durch einen Schleusenbereich (9), insbesondere durch den ersten Schleusenbereich (9.1), in den Roboterbereich (2a) des Wachstumsbereichs (2) gebracht und im Kulturbereich (2b) in die erste Klimazone (2.1), beispielsweise in einer Tagesparzelle (2c), platziert;

ii) Anschliessend verweilen die Keimtische (3) in der ersten Klimazone (2.1) während einer ersten Wachstumsdauer W1. Nachfolgend werden die Klimatische (3) mit den Setzlingen (4) für die zweite Wachstumsdauer W2 - beispielsweise mittels Roboter (5.1) - in die nächste Klimazone (2.2, 2.n) verschoben;

iii) In einem weiteren, optionalen, Verfahrensschritt werden die Keimtische (3) mit den Setzlingen (4) für weitere Wachstumsdauer W3... Wn-1 in die nachfolgenden Klimazonen (2.3, . 2.n-1) verschoben, bis die Keimtische (3) die letzte Wachstumsdauer Wn in der letzten Klimazone (2.n) erreicht haben; und

iv) Nach Ablauf der letzten Wachstumsdauer Wn werden die Keimtische (3) mit den so kultivierten Kulturpflanzen P, d.h. den erntereifen Setzlingen (4), aus der letzten Klimazone (2.n) entfernt und gegebenenfalls, insbesondere bevorzugt, durch den zweiten Schleusenbereich (9.2) in den Ernte- und Aufbereitungsbereich (8) des Gewächshauses (1) verschoben.

In einer bevorzugten Ausführungsform des erfindungsgemässen Verfahrens werden die Keimtische (3) mit den Setzlingen (4)

- während einer Wachstumsdauer W in einer Klimazone

  ○ mittels Bewegungsmittel (12) vom Eingang E zum Ausgang A der jeweiligen Klimazone (2.1, .... 2.n) bewegt. Geeignete Bewegungsmittel (12) sind dem Fachmann bekannt und umfassen beispielsweise Rollen und/oder Bänder, auf welchen die Keimtische (3) angeordnet sind und fortbewegt werden können. Auch ist es möglich, dass die Keimtische (3) selbst auf einem Roboter (5.1) fest angeordnet sind und sich dadurch selbständig bewegen können; oder
  ○ innerhalb einer Klimazone (2.1, ..., 2.n) stationär, beispielsweise in einer Tagesparzelle (2c), angeordnet;

- mittels Bewegungsmittel (12) und/oder Roboter (5.1) von einer Klimazone zur nächsten Klimazone verschoben. Dabei wird ein Roboter (5.1) bevorzugt dann eingesetzt, wenn die Klimazonen übereinander angeordnet sind und dadurch die Keimtische (3) mit den Setzlingen (4) von einer Etage zu einer - beispielsweise darunter liegende Etage - überführt werden müssen. Bewegungsmittel (12) eignen sich insbesondere dann, wenn die beiden Klimazonen nebeneinander angeordnet sind und die Keimtische (3) mit den Setzlingen (4) beispielsweise auf Rollen von einer Klimazone direkt in die nachfolgende Klimazone geführt werden; und/oder

- am Ende der letzten Wachstumsdauer Wn aus der letzten Klimazone (2.n) mittels Bewegungsmittel (12) oder Roboter (5.1) entfernt werden.

In einer ganz besonders bevorzugten Ausführungsform des Verfahrens werden Keimtische (3) mit Setzlingen (4) in die erste Klimazone (2.1) regelmässig, bevorzugt täglich, eingefügt. Dabei wird die Fläche der weiteren Klimazonen (2.2, .... 2.n) in Abhängigkeit der Wachstumsdauer in den jeweiligen Klimazonen so bemessen, dass regelmässig, bevorzugt täglich, Keimtische (3) mit kultivierten Kulturpflanzen P, d.h. Setzlingen (4), aus der letzten Klimazone (2.n) entfernt - und anschliessend geerntet - werden können. Dies erlaubt eine kontinuierliche, d.h. tägliche, Ernte der angebauten Setzlinge (4), was auch eine kontinuierliche Verarbeitung der Ernte ermöglicht. Dies ist äusserst vorteilhaft und im Kontrast zur herkömmlichen Landwirtschaft, welche lediglich während ein bis dreimal pro Jahr eine Ernte zulässt.

Die Anzahl Keimtische (3) mit Setzlingen (4), die pro Tag in die erste Klimazone (2.1) eingefügt werden, genügen bevorzugt der Formel (1)

$$X_1 = Y_1 / Z_1 \qquad\qquad (1),$$

wobei

$X_1$    für die Anzahl der in die erste Klimazone (2.1) eingefügter Keimtische (3) mit Setzlingen (4) pro Tag,

$Y_1$    für die Anzahl der Keimtische (3) mit Setzlingen (4), welche in der ersten Klimazone (2.1) eingefügt werden kann, und

$Z_1$    für Anzahl Tage der beabsichtigten Wachstumsdauer der Setzlinge (4) in den Keimtischen (3) in der ersten Klimazone (2.1), steht.

Zudem ist es vorteilhaft, wenn die Grundfläche $F_{KZ}$ der jeweiligen Klimazonen (2.2, .... 2.n) den Formeln (2) und (3)

$$F_{KZ} \qquad = \qquad Y_{(2.2, \ .... \ 2.n)} * F_{KT} \qquad (2)$$

$$Y_{(2.2, \ .... \ 2.n)} \qquad = \qquad X_1 * Z_{(2.2, \ .... \ 2.n)} \qquad (3)$$

genügt, wobei

$F_{KZ}$        für die Grundfläche der jeweiligen Klimazonen (2.2, .... 2.n),

$F_{KT}$        für die mittlere Grundfläche der Keimtische (3),

$X_1$        für die Anzahl der in die erste Klimazone (2.1) eingefügten Keimtische (3) pro Tag,

$Y_{(2.2,....2.n)}$    für die Anzahl der Keimtische (3) mit Setzlingen (4), welche in der jeweiligen Klimazone (2.2, .... 2.n) eingefügt werden kann, und

$Z_{(2.2,....2.n)}$    für die Anzahl Tage der beabsichtigten Wachstumsdauer der Setzlinge (4) in den Keimtischen (3) in der jeweiligen Klimazone (2.2, .... 2.n),

steht.

In einer weiteren Ausführungsform des Verfahrens werden die Keimtische (3)

- im Bestückungs- und Kontrollbereich (7) mit den Setzlingen (4) und gegebenenfalls dem Nährmedium (4.1) bestückt und anschliessend, gegebenenfalls durch den ersten Schleusenbereich (9.1), in die erste Klimazone (2.1) des Wachstumsbereichs (2) eingeführt; und/oder

- die Keimtische (3) mit den kultivierten Kulturpflanzen P, d.h. den ausgewachsenen Setzlingen (4), aus der letzten Klimazone (2.n) des Wachstumsbereichs (2), gegebenenfalls durch den zweiten Schleusenbereich (9.2), in den Ernte- und Aufbereitungsbereich (8) überführt werden, in welchem die Kulturpflanzen P geerntet, aufbereitet, und gegebenenfalls anschliessend im Verarbeitungs- und/oder Abpackbereich (10) weiter verarbeitet, wie beispielsweise getrocknet und/oder extrahiert, und die erhaltenen Produkte abgepackt werden.

Beispiel der Kultivierung von Tomaten und medizinischem Cannabis

In einer Ausführungsform des beanspruchten Verfahrens dauert das Kultivieren der Setzlinge (4) - beispielsweise mit Tomaten und medizinischem Cannabis - im beanspruchten Gewächshaus (1) bis zur Ernte insgesamt 96 Tage. Dabei kann die ausgewachsene Pflanze eine Höhe von bis zu einem Meter oder mehr und horizontal einen Durchmesser von bis zu 0.3 Meter aufweisen. Dazu werden im Bestückungs- und Kontrollbereich (7) des Gewächshauses (1) quadratische, wannenförmige Keimtische (3) aus Aluminium oder Kunststoff mit einer Kantenlänge von 2 x 2 Meter mit insgesamt 8 x 8, d.h. mit total 64, Setzlingen (4) in Form von Stecklingen (für Tomaten und Cannabis), sowie in Form von Samen (für Chili) bestückt. Die Stecklinge weisen eine Länge von beispielsweise 8 bis 12cm auf, wobei der untere Bereich der Setzlinge (4) 3-5 cm in ein Nährmedium aus Erde, Kokos, Steinwolle und/oder anderen Pflanzsubstraten steckt. Alternativ können sie im Fall von Aquaponics in einem Hydrosubstrat stecken und im Fall von Aeroponics hängen die Setzlinge in einem Gitter oder in einem Plant-Holder in der Luft, wobei sie per Ultraschall-Sprühnebel mit Nährlösung besprüht werden.

Die in den Keimtischen (3) frisch angeordneten Stecklinge (4) werden zunächst in einer ersten Steckling-/Wurzelphase ausserhalb des automatisierten Wachstumsbereich (2) in einem Setzlingsbereich, welcher Teil des Bestückungs- und Kontrollbereichs (7) ist, ohne Naturlicht während insgesamt 16 Tagen kultiviert, wobei die Kultivierung in einem Wurzelmedium, d.h. Pflanzsubstrat, erfolgt. Dies erlaubt eine einfache Überprüfung der frischen Stecklinge (4), was bei Bedarf ein schneller manueller Zugriff ermöglicht, wodurch die Pflanze einen optimalen Wachstumsstart erhält. Die Temperatur beträgt um die 25°C und die relative Luftfeuchtigkeit 75-90%, wobei kein zusätzliches $CO_2$ hinzugefügt wird. Während dieser Phase werden die Setzlinge (4) pro Tag während 18-20 Stunden mit schwachem, bläulichem LED-Licht mit einer Wellenlänge von 400-500nm und einer Lichtintensität von ca. 20-40 W/m2 belichtet. Während der restlichen 6-4 Stunden pro Tag erfolgt keine Belichtung, d.h. die Setzlinge (4) sind im Dunkeln. Der Setzlingsraum wird beispielhaft belüftet.

Nach der ersten Steckling-/Wurzelphase werden die Keimtische (3) mit den Setzlingen (4) zur weiteren Kultivierung, beispielsweise mittels Rollen, Förderband, Rollen-Fördersystem, Roboter oder Wagen, in den Scan- und Mess-Bereich (11) zum Scannen und Messen der Setzlinge (4), und durch den ersten Schleusenbereich (9.1) in den Roboterbereich (2a) des automatisierten Wachstumsbereichs (2) geführt, wo ein Roboter (5.1) des Robotersystems (5) den Keimtisch (3) mit den Setzlingen (4) in die erste Klimazone (2.1) des automatisierten Wachstumsbereich (2) des Gewächshauses (1) überführt. Dabei verschiebt der Roboter (5.1) die Keimtische (3) mit den wachsenden Setzlingen (4) jeweils auch von Klimazone zu Klimazone, d.h. von Etage zu Etage.

Der automatisierte Wachstumsbereich (2) des Gewächshauses (1) umfasst einen äusseren Roboterbereich (2a) und einen inneren Kulturbereich (2b). Letzterer weist beispielhaft 5 verschiedene, übereinander angeordnete Etagen auf, wobei in jeder Etage eine andere Klimazone angeordnet ist. Beispielhaft dauert die Wachstumsdauer W jeder dieser 5 Klimazonen 16 Tage. In diesem Ausführungsbeispiel weist jede Klimazone des Kulturbereichs (2b) auch insgesamt 16 Tagesparzellen (2c) auf. Somit wird täglich je Klimazone eine Tagesparzelle (2c) mit beispielhaft 1 x 3, d.h. insgesamt 3, Keimtischen (3) mit je 64 Setzlingen (4), und somit insgesamt 192 Setzlinge (4) je Tagesparzelle (2c), gefüllt. Am gleichen Tag werden zudem alle Keimtische (3) mit Setzlingen (4), welche schon 16 Tage in der Tagesparzelle (2c) kultiviert wurden, aus der Tagesparzelle (2c) mittels Roboter (5.1) entfernt und in eine Tagesparzelle (2c) der zweiten Klimazone (2.2) verschoben. Dementsprechend werden auch Keimtische (3) mit Setzlingen (4) aus einer Tagesparzelle (2c) der zweiten Klimazone (2.2) in die dritte Klimazone (2.3) verschoben, und Keimtische (3) mit Setzlingen (4) aus einer Tagesparzelle (2c) der dritten Klimazone (2.3) in die vierte (2.4) resp. fünfte und letzte Klimazone (2.5/ 2.n) verschoben. Somit können auch jeden Tag 3 Keimtische (3) mit ausgereiften Setzlingen (4), welche insgesamt während 96 Tagen, davon 80 Tage im Kulturbereich (2b) des automatisierten Wachstumsbereich (2), kultiviert wurden, mittels Roboter (5.1) aus der Tagesparzelle (2c) der letzten Klimazone (2.n) entnommen werden und via Roboterbereich (2a) durch den zweiten Schleusenbereich (9.2) in den Ernte- und Aufbereitungsbereich (8) zur Ernte des kultivierten medizinischen Cannabis überführt werden.

Optional kommen die Keimtische (3) bei jeder Klimazonenverschiebung zuerst zum Bestückungs- und Kontrollbereich (7), wobei die Setzlinge (4) kontrolliert und gegebenenfalls reife Früchte geerntet werden. Alternativ - oder zusätzlich - durchlaufen die Keimtische (3) mit den Setzlingen (4) den Scan- und Mess-Bereich (11), in welchem sie gemessen und gescannt werden. Anschliessend werden die Keimtische (3) mit den Setzlingen (4) mittels Roboter (5.1) zurück in den automatischen Wachstumsbereich (2) und in die nachfolgende Klimazone transportiert.

Im Kulturbereich (2b) des automatisierten Wachstumsbereichs (2) werden die Setzlinge (4) für die Vegetationsphase in der ersten Klimazone (2.1) platziert, welche beispielhaft und bevorzugt in der obersten Etage des Kulturbereichs (2b) angeordnet ist. In der zweiten Klimazone (2.2), welche sich beispielhaft in der zweitobersten Etage des Kulturbereichs (2b) befindet, durchlaufen die Setzlinge (4) die Stretchphase, gefolgt von insgesamt drei generativen Phasen in der dritten, vierten und fünften Klimazone (2.3; 2.4; 2.5), wobei in dieser Anordnung die fünfte Klimazone (2.5) auch die letzte Klimazone (2.n) ist.

Dabei weist die erste Klimazone (2.1), d.h. die Vegetationsphase, eine Temperatur T um die 25°C und eine relative Luftfeuchtigkeit von ca. 75% auf, wobei der Gasphase beispielhaft kein zusätzliches $CO_2$ hinzugefügt wird. Im Fall einer $CO_2$-Zugabe wird bevorzugt die Temperatur erhöht, beispielsweise auf 28-33 °C. In der ersten Klimazone (2.1) werden die Setzlinge (4) pro Tag während 18 Stunden mit schwachem, bläulichem LED-Licht mit einer Wellenlänge von 400-500 nm und einer Lichtintensität von 200-300 W/m$^2$ belichtet. Während der restlichen 6 Stunden pro 24-Stunden Zyklus erfolgt keine Belichtung, d.h. die Setzlinge (4) sind im Dunkeln.

Die zweite Klimazone (2.2), d.h. die Stretchphase, weist beispielhaft eine Temperatur T zwischen 28-33°C und eine relative Luftfeuchtigkeit von ca. 70% auf. Der Gasphase wird während den Belichtungsphasen kontinuierlich zusätzliches $CO_2$ hinzugefügt, um den $CO_2$-Gehalt auf 800-1'000 ppm einzustellen. Die Setzlinge (4) werden pro 24 Stunden-Tag während 12 Stunden mit mittelstarkem, rötlichem LED-Licht mit einer Wellenlänge von 620-780 nm und einer Lichtintensität von 400-500 W/m$^2$ belichtet. Während der restlichen 12 Stunden pro 24-Stunden Zyklus erfolgt keine Belichtung, d.h. die Setzlinge (4) sind im Dunkeln.

Die dritte (2.3), vierte (2.4) und fünfte (2.5), d.h. letzte (2.n), Klimazone, in welchen die generativen Phasen des Pflanzenwachstums stattfinden, weisen ebenfalls eine Temperatur T zwischen 28-33°C auf und der Gasphase wird ebenfalls während den Belichtungsphasen kontinuierlich zusätzliches $CO_2$ hinzugefügt, um den $CO_2$-Gehalt auf 1'000-1'500ppm einzustellen. Die Setzlinge (4) werden pro 24 Stunden-Tag jeweils während 12 Stunden mit stärkerem, rötlichem LED-Licht mit einer Wellenlänge von 620-780nm und einer Lichtintensität von 600-700 W/m$^2$ belichtet. Während der restlichen 12 Stunden pro 24-Stunden Zyklus erfolgt keine Belichtung, d.h. die Setzlinge (4) sind im Dunkeln. Die relative Luftfeuchtigkeit wird in der dritten Klimazone (2.3) auf ca. 65%, in der vierten Klimazone (2.4) auf ca. 60% und in der letzten Klimazone (2.n) auf ca. 55% eingestellt.

In allen Klimazonen (2.1, ..., 2.n) erfolgt beispielhaft während den Belichtungsphasen eine musikalische Beschallung der Setzlinge (4) mit einer Lautstärke von 72 dB und 74 Schläge pro Minute (beats per minute; BPM).

Die Raumhöhe $R_1$ der ersten Klimazone (2.1), d.h. der Vegetationsphase I), beträgt beispielsweise 0.9 m, die Raumhöhe $R_2$ der zweiten Vegetationsphase II) 1.3 m und die Raumhöhen $R_{3-5}$ der drei generativen Phasen III) bis V) betragen alle 1.6 m. Somit ist die Raumhöhe der letzten Klimazone (2.n) um insgesamt 78% grösser als die Raumhöhe der ersten Klimazone (2.1).

Die so kultivierten Tomaten werden zur Ernte durch den zweiten Schleusenbereich (9.2) in den Ernte- und Aufbereitungsbereich (8) verschoben, wo sie gepflückt werden. Falls die Keimtische (3) noch unreife Tomaten aufweisen, werden diese nochmals für ein bis wenige Tage in die Klimazone (2.n) verschoben werden, damit sie weiter reifen können. Dieser Schritt kann gegebenenfalls mehrfach wiederholt werden.

Das kultivierte medizinische Cannabis wird am Ende der letzten Klimazone zur Ernte durch den zweiten Schleusenbereich (9.2) in den Ernte- und Aufbereitungsbereich (8) überführt. Dabei ist die Anzahl Keimtische (3), welche täglich mit erntereifen Setzlingen (4) in den Ernte- und Aufbereitungsbereich (8) überführt werden, typischerweise identisch mit der Anzahl Keimtische (3), welche mit jungen Setzlingen (4) in die erste Klimazone (2.1) eingeführt werden.

Beispiel der Kultivierung von Chili, Paprika und Peperoni

Chili, Paprika, Peperoni, aber auch Habañero und Jalapeño, nachfolgend gemeinsam Chili genannt, eignen sich - wie auch viele weitere Kulturpflanzen - zur Kultivierung im erfindungsgemässen Gewächshaus (1). Da sie alle zur Gattung Caspicum gehören, können sie bei vergleichbaren Bedingungen kultiviert werden. Beliebte Chilisorten wie Cayenne, Anaheim und Jalapeño können im ausgewachsenen Stadium im Durchschnitt bis 1.30 Meter hoch werden und einen mittleren Durchmesser von 0.30 Meter aufweisen, wobei andere Chilisorten bis 4m Höhe erreichen können. Bei solchen Setzlingen wird die unten aufgeführte Raumhöhe entsprechend angepasst.

Zur Kultivierung von Chili werden bevorzugt Samen in das Nährmedium eingebracht, wobei jedoch anstelle von Samen auch Stecklinge verwendet werden können. Beispielhaft werden quadratische Keimtische (3) mit einer Kantenlänge von 2 m beispielhaft mit 64 Setzlingen bestückt.

Für die Vorzucht im Setzlingsbereich des Bestückungs- und Kontrollbereichs (7) wird während 14-21 Tagen bevorzugt eine Temperatur von ca. 20 °C und eine relative Luftfeuchtigkeit von ca. 80-90% eingestellt, wobei kein zusätzliches $CO_2$ hinzugefügt wird. Das Belichtungsintervall mittels einer LED-Lampe beträgt 12-16 Stunden Belichtung und 12-8 Stunden Dunkelheit. Die bevorzugte Raumhöhe beträgt 0.50-1.00 Meter

Die nachfolgende Vegetationsphase in der ersten Klimazone (2.1) erfolgt während 18 Tagen bei einer Temperatur von 25°C, einer relativen Luftfeuchtigkeit von 75% und einem $CO_2$-Gehalt von 800-1'000ppm, wobei während der Dunkelheit kein zusätzliches $CO_2$ hinzugefügt wird. Pro 24-Stunden Tag werden die Setzlinge (4) 12-16 Stunden mit LED-Licht belichtet, wobei die restliche Zeit Dunkelheit herrscht. Die bevorzugte Raumhöhe beträgt 1.00 Meter.

Die nachfolgenden generativen Phasen der Kultivierung erfolgt typischerweise in 3 Klimazonen (2.2, 2.3, 2.4). Dabei weisen diese Klimazonen eine Temperatur T von 24-26°C auf, wobei den Gasphasen während den Belichtungsphasen kontinuierlich zusätzliches $CO_2$ hinzugefügt, um den $CO_2$-Gehalt auf 800-1'000 ppm einzustellen. Die Setzlinge (4) werden pro 24 Stunden-Tag jeweils während 16 Stunden mit stärkerem, rötlichem LED-Licht mit einer Wellenlänge von 620-780nm und einer Lichtintensität von 600-700 W/m$^2$ belichtet. Während der restlichen Zeit bleiben die Setzlinge (4) im Dunkeln. Die relative Luftfeuchtigkeit wird in der zweiten Klimazone (2.2) auf ca. 75%, in der dritten Klimazone (2.3) auf ca. 70% und in der letzten Klimazone (2.4; 2.n) auf ca. 65% eingestellt. Die Raumhöhe beträgt bei diesen Klimazonen 1.50 m.

Es werden folgende Bezugzeichen verwendet:

1 mikroklimatisches Gewächshaus (1)
2 automatisierten Wachstumsbereich (2)

2.1 erste Klimazone (2.1)
2.n letzte Klimazone (2.n),
2.2, ..., 2.n-1 weitere Klimazonen (2.2, ..., 2.n-1)
2a Roboterbereich (2a)
2b Kulturbereich (2b)
2c Tagesparzellen (2c)

3 Vielzahl von Keimtische (3)
4 Vielzahl von Setzlingen (4) der Nutz- und Zierpflanzen P
4.1 Nährmedium (4.1)
5 Robotersystem (5)

5.1 Roboter (5.1)
5.2 Robotik-Grid (5.2)
5.3 Ladestation (5.3) für den Roboter (5.1)

6 Haustechnik (6)
7 Bestückungs- und Kontrollbereich (7)
8 Ernte- und Aufbereitungsbereich (8)
9 Schleusenbereiche

9.1 erster Schleusenbereich
9.2 zweiter Schleusenbereich

10 Verarbeitungs- und/oder Abpackbereich (10)
11 Scan- und Mess-Bereich (11)
12 Bewegungsmittel (12)

Im Folgenden werden nicht-limitierende, bevorzugte Ausführungsformen des erfindungsgemässen Gewächshauses (1) und des erfindungsgemässen Verfahrens anhand der nachfolgenden Zeichnungen beschrieben. Diese sind nicht einschränkend auszulegen und werden als Bestandteil der Beschreibung verstanden:

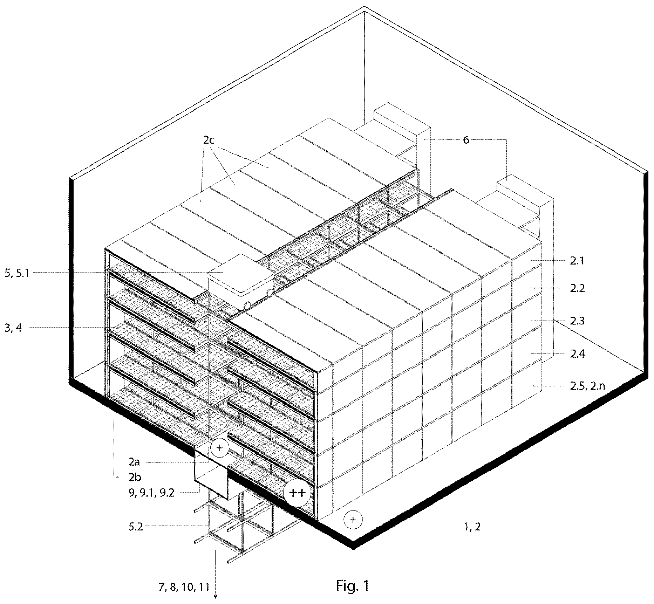

Fig. 1 offenbart eine beispielhafte dreidimensionale Ansicht des erfindungsgemässen Gewächshauses (1) mit dem automatisierten Wachstumsbereich (2) umfassend den Roboterbereich (2a) und den Kulturbereich (2b) mit den Keimtischen (3) und den Setzlingen (4). Von den Aussenwänden des Wachstumsbereichs (2) beabstandet sind die Klimazonen (2.1) bis (2.5) übereinander angeordnet. Dabei befindet sich die erste Klimazone (2.1) mit der geringsten Raumhöhe $R_1$ auf der obersten Etage des Kulturbereichs (2b). Darunter folgt die zweite Klimazone (2.2) mit einer etwas grösseren Raumhöhe $R_2$ und weiter die dritte (2.3), vierte (2.4) und fünfte (2.5) Klimazonen, wobei die fünfte (2.5) zugleich auch die letzte Klimazone (2.n) ist.
Die Klimazonen (2.1, ..., 2.5) sind in einzelne Tagesparzellen (2c) unterteilt, wobei der Kulturbereich (2b) mit den Tagesparzellen (2c) symmetrisch in zwei Bereiche unterteilt ist, welche mit dem Robotersystem (5) mit Robotik-Grid (5.2) miteinander verbunden sind. Der Roboter (5.1) kann mittels Robotik-Grid (5.2) die Öffnungen aller Tagesparzellen (2c) erreichen. Auch kann er Keimtische (3) mit den jungen Setzlingen (4) vom ersten Schleusenbereich (9.1) abholen und zur ersten Tagesparzelle (2c) der ersten Klimazone (2.1) transportieren. Nach Ablauf der Wachstumsdauer in der ersten Klimazone (2.1) holt der Roboter (5.1) den Keimtisch (3) mit den Setzlingen (4) wieder ab und bringt ihn zu einer Tagesparzelle (2c) der zweiten, nachfolgenden Klimazone (2.2). Dies wird wiederholt, bis zur letzten Klimazone (2.n). Nach Abschluss der Kultivierung bringt der Roboter (5.1) die Keimtische (3) mit den kultivierten Setzlingen (4) zum zweiten Schleusenbereich (9.2). Anschliessend wird der Keimtisch (3) und die Setzlinge (4) zum Ernte- und Aufbereitungsbereich (8) geführt, wo die Pflanzen P geerntet werden. In der dargestellten Ausführungsform ist der Roboter (5.1) oberhalb der obersten Klimazone (2.1) angeordnet und kann entlang des 3D-Robotik Grid hin und her fahren. Die Keimtische (3) mit den Setzlingen (4) können aus den Tagesparzellen (2c) mit Hilfe von Bewegungsmittel (12; nicht dargestellt) auf das 3D-Roboter Grid fahren, wo sie vom Roboter (5.1), welcher über die Keimtische (3) fährt, an den Ecken beispielsweise mittels Elektromagneten, welche an Seilwinden des Roboters (5.1) angeordnet sind, fixiert werden. Um die Keimtische (3) beispielsweise zur darunter liegenden Tagesparzelle (2c) zu bringen, können beispielsweise die seitlichen Führungen das 3D-Robotik Grids, auf welchen der Keimtisch (3) angeordnet ist, eingeklappt werden, sodass der Keimtisch (3) mit den darin befindlichen Setzlingen (4) zum darunter liegenden 3D-Robotik Grid transportiert werden kann. Dort lösen sich die Elektromagnete und der Keimtisch gelangt mittels der Bewegungsmittel (12) in die entsprechende Tagesparzelle (2c) der nächsten Klimazone. Dabei ist jeder Bereich des Kulturbereichs (2b) mit der Haustechnik (6) verbunden, um die Belüftung mit konditionierter Luft sicherzustellen. Dabei wird auch die Belichtung mit Strom versorgt und Wasser resp. Nährlösung zu den Setzlingen geleitet.

Mit den Zeichen (+) und (++) wird der relative Überdruck in den jeweiligen Bereichen dargestellt. Der Roboterbereich (2a) zwischen den beiden Kulturbereichen (2b) und um die Kulturbereiche (2b) weist einen Überdruck im Vergleich zu den Bereichen ausserhalb des Gewächshauses (1) auf. Und der Kulturbereich (2b) mit den dargestellten Tagesparzellen (2c) weist wiederum einen Überdruck auf im Vergleich zum Roboterbereich (2a).

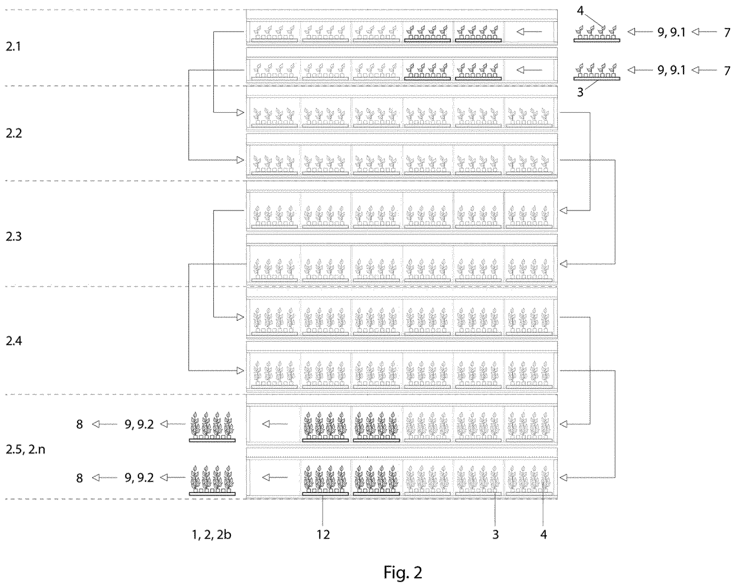

Fig. 2     zeigt den Querschnitt des Kulturbereichs (2b) eines beispielhaften automatischen Wachstumsbereichs (2) des erfindungsgemässen Gewächshauses (1). Dabei sind je Klimazonen (2.1, ... 2.n) jeweils zwei Etagen übereinander angeordnet. Dabei können die Etagen wie angezeigt parallel betrieben werden, d.h. ein Keimtisch (3) mit Setzlingen (4) bewegt sich nur in einer Etage. Alternativ kann ein Keimtisch (3) mit Setzlingen (4) die Hälfte der jeweiligen Wachstumsdauer W in der oberen Etage und die andere Hälfte der Wachstumsdauer W in der unteren Etage verbringen.

Die Keimtische (3) mit Setzlingen (4) kommen vom Bestückungsund Kontrollbereich (7) durch den ersten Schleusenbereich (9.1) in den Wachstumsbereich (2), wo sie mittels Robotersystem (5; nicht dargestellt) in die erste Klimazone (2.1) eingefügt werden. Mittels Bewegungsmittel (12) werden die Keimtische (3) entlang der Klimazone (2.1) geführt, bis sie - beispielhaft an der linken Seite des Kulturbereichs (2b) - zu dessen Ausgang. Von dort führt sie der Roboter (5.1) zur zweiten Klimazone (2.2) einer darunter liegenden Etage. Dieser Vorgang wird wiederholt, bis die Keimtische (3) mit Setzlingen (4) zur fünften und letzten Klimazone (2.5, 2.n) gelangen. Nachdem auch diese durchlaufen sind, werden die Keimtische (3) mit den kultivierten Setzlingen (4) durch den zweiten Schleusenbereich (9.2) zum Ernte- und Aufbereitungsbereich (8) geleitet, wo die kultivierten Pflanzen geerntet werden.

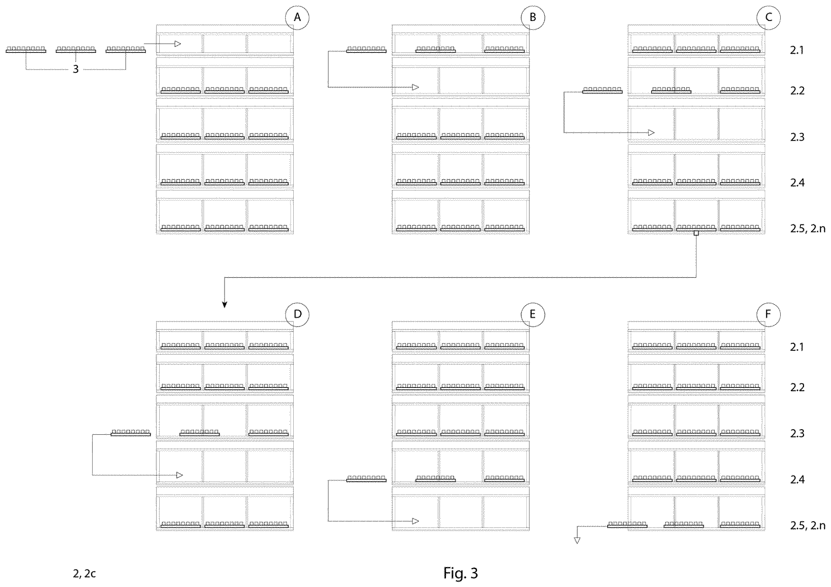

Fig. 3     zeigt eine beispielhafte Anordnung des Kulturbereichs (2b) mit Tagesparzellen (2c). In Fig. 3A werden Keimtische (3) in die leere Tagesparzelle (2c) der ersten Klimazone (2.1) eingefügt, wobei die Setzlinge (4) nicht dargestellt sind.

Nach Ablauf der vorgegebenen Wachstumsdauer W werden die Keimtische (3) mit den Setzlingen (4) von der ersten Klimazone (2.1) in eine leere Tagesparzelle (2c) der zweiten Klimazone (2.2) überführt (Fig. 3B). Analog gelangen die Keimtische (3) mit Setzlingen (4) in die dritte Klimazone (2.3; Fig. 3C), vierte Klimazone (2.4; Fig. 3D) und fünfte Klimazone (2.5; Fig. 3E). Am Ende der letzten Wachstumsdauer Wn werden die Keimtische (3) mit den kultivierten Setzlingen (4) aus dem Kulturbereich (2b) des Wachstumsbereichs (2) entfernt und zum Ernte- und Aufbereitungsbereich (8) geführt, wo sie geerntet werden.

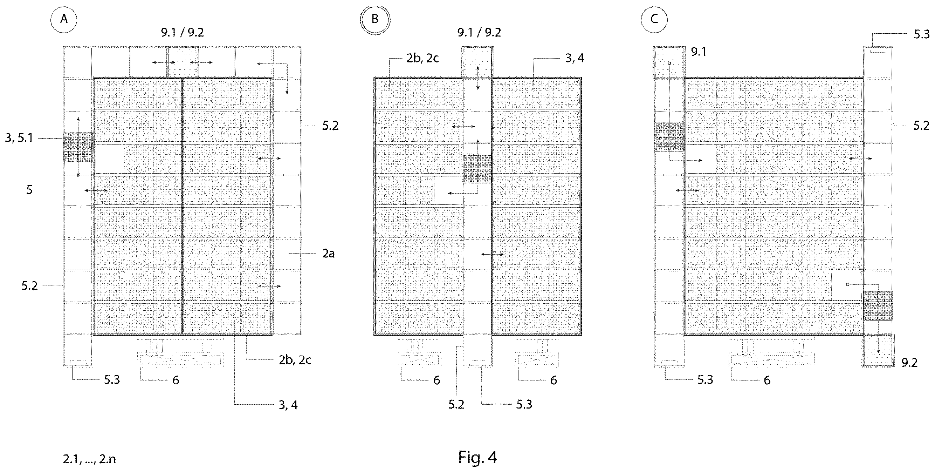

Fig. 4     zeigt eine Aufsicht einer Klimazone (2.1, ..., 2.n) in drei verschiedenen beispielhaften Ausführungen (A/ B/ C). Fig. 4A zeigt einen Kulturbereich (2b), welcher von der Roboterzone (2a) umgeben ist. In dieser ist der Kulturbereich (2b) an drei Seiten mit einem Robotik-Grid (5.2) umgeben, auf welchem der Roboter (5.1) sich bewegt. Der Kulturbereich (2b) ist in eine Vielzahl von Tagesparzellen (2c) unterteilt, in welchen jeweils drei Keimtische (3) mit Setzlingen (4) befinden. An der vierten Seite des Kulturbereichs (2b) befindet sich die Haustechnik (6), welche die konditionierte Gasphase zu jeder einzelnen Tagesparzelle (2c) führt und über den Gasauslass wieder abführt. Gegenüber der Haustechnik (6) befindet sich ein Aufzug, welcher die Roboter (5.1) von Etage zu Etage, und somit von Klimazone zu Klimazone, bringt. Ebenfalls führt dieser zum Schleusenbereich (9) mit dem ersten (9.1) und zweiten (9.2) Schleusenbereich, wobei diese in dieser Ausführungsform identisch sein können. Alternativ ist der Aufzug gleichzeitig der Schleusenbereich (9, 9.1, 9.2). An einem Ende des Robotik-Grids (5.2) befindet sich die Ladestation (5.3) des Robotersystems (5).

Fig. 4B zeigt einen Kulturbereich (2b), welcher von der Roboterzone (2a) mit dem Robotersystem (5) in der Mitte unterteilt ist. In dieser ist das Robotik-Grid (5.2) angeordnet, entlang welchem der Roboter (5.1) die einzelnen Tagesparzellen (2c) mit den Keimtischen (3) und Setzlingen (4) erreichen kann. An einem Ende des Robotik-Grids (5.2) befindet sich die Ladestation (5.3) für den Roboter (5.1), und am anderen Ende der Aufzug zu den anderen Etagen und zum Schleusenbereich (9, 9.1, 9.2). Die Tagesparzellen (2c) sind ebenfalls mit der Haustechnik (6) verbunden, um die konditionierte Gasphase zu jeder einzelnen Tagesparzelle (2c) führt und über den Gasauslass wieder abführt.

Fig. 4C zeigt einen Kulturbereich (2b), welcher mit zwei voneinander unabhängigen Robotersystemen (5) mit Roboter (5.1) und Robotik-Grid (5.2) seitlich begrenzt ist. Dabei führt ein Rotobersystem (5)-gegebenenfalls über einen Aufzug - zum ersten Schleusenbereich (9.1) und das andere Rotobersystem (5) zum zweiten Schleusenbereich (9.2). Somit bringt der Roboter (5.1) einen Keimtisch (3) mit Setzlingen (4) in den Eingang der Klimazone, von welchem der Keimtisch (3) mit Setzlingen (4) zum gegenüberliegenden Robotik-Grid (5.2) geführt wird. Entspricht diese Verweildauer des Keimtisches (3) mit den Setzlingen (4) der gewünschten Wachstumsdauer W, wird der Keimtisch (3) mit Setzlingen (4) anschliessend zum Aufzug und zur nächsten Klimazone gefördert. Sind die Setzlinge (4) fertig kultiviert, werden diese dann zum zweiten Schleusenbereich und zum Ernte- und Aufbereitungsbereich (8) weiter geleitet.

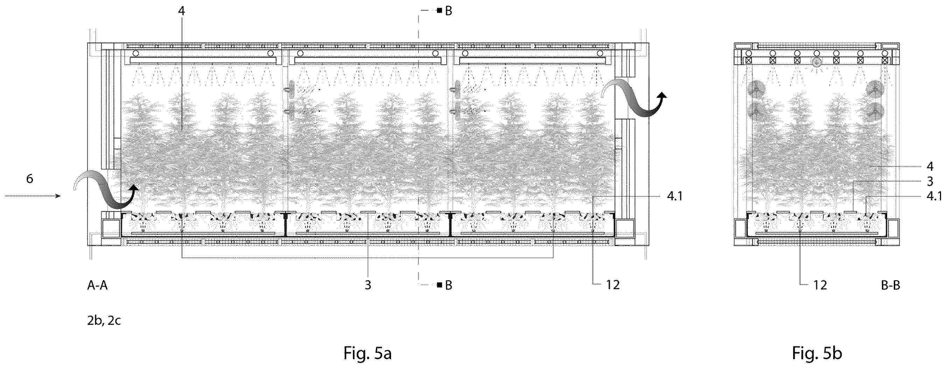

Fig. 5     zeigt beispielhaft eine Tagesparzelle (2c) von deren Seite (Fig. 5a) und deren Front (Fig. 5b). Die dargestellte Tagesparzelle (2c) umfasst drei Keimtische (3) mit einer Vielzahl an Setzlingen (4), welche bereits eine gewisse Grösse erreicht haben. Die Keimtische (3) sind beispielhaft in Form eines Gitters oder Plant-Holders. Die Tagesparzelle (2c) umfasst ein Belüftungssystem mit Gaseinlass (Fig. 5a, links) und Gasauslass (Fig. 5a, rechts). Zur Unterstützung der Gaszirkulation sind im oberen Bereich der Tagesparzelle (2c) zusätzlich kleine Ventilatoren angeordnet.

Im inneren oberen Bereich der Tagesparzelle befindet sich eine Vielzahl an länglichen LED-Beleuchtungsmitteln zur individuellen Belichtung der Keimtische (3) - und somit der Setzlinge (4). Die Wasser- und Nährstoffzufuhr, beispielhaft in Form eines Sprühnebels, welcher von unten nach oben gerichtet ist, sind unterhalb der Keimtische angeordnet. Zudem umfasst die Tagesparzelle (2c) einen Lautsprecher zur Beschallung der Setzlinge (Fig. 5b, Deckenmitte) sowie ein Sensorsystem mit diversen Sensoren, die jedoch nicht dargestellt sind.

Die Tagesparzelle (2c) weist im unteren Bereich beispielhaft Bewegungsmittel (12) auf, auf welchen die Keimtische (3) angeordnet sind. Die Bewegungsmittel (12) ermöglichen, dass die Keimtische (3) in die Tagesparzellen eingefügt werden und wieder aus diesen entfernt werden. Die Bewegungsmittel (12) können Teil der Tagesparzelle (2c) und/oder am Boden der Keimtische (3) befestigt sein.

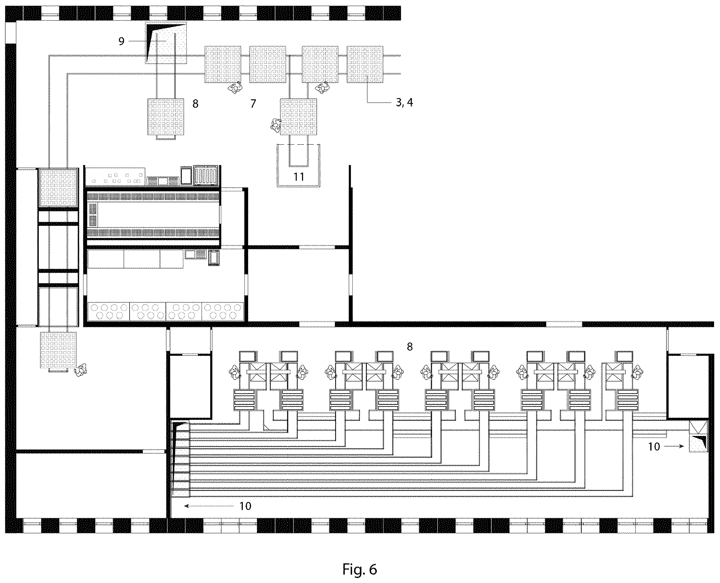

Fig. 6     zeigt eine nicht-limitierende Ausführungsform des Bestückungs- und Kontrollbereichs (7) des Gewächshauses (1), welcher an den Schleusenbereich (9, 9.1, 9.2) angrenzt. Die Keimtische (3) mit den Setzlingen (4) können beispielsweise auf einem Rollenfördersystem hin und her bewegt werden. Der Scan- und Mess-Bereich (11) ist beispielhaft mit dem Bestückungs- und Kontrollbereich (7) verbunden.

Auf der gegenüberliegenden Seite ist der Ernte- und Aufbereitungsbereich (8) und der Verarbeitungs- und/oder Abpackbereich (10) angeordnet.

Zwischen dem Bestückungs- und Kontrollbereich (7) und dem Ernteund Aufbereitungsbereich (8) befindet sich beispielhaft ein Setzlingsraum sowie ein Raum für die Mutterpflanzen.

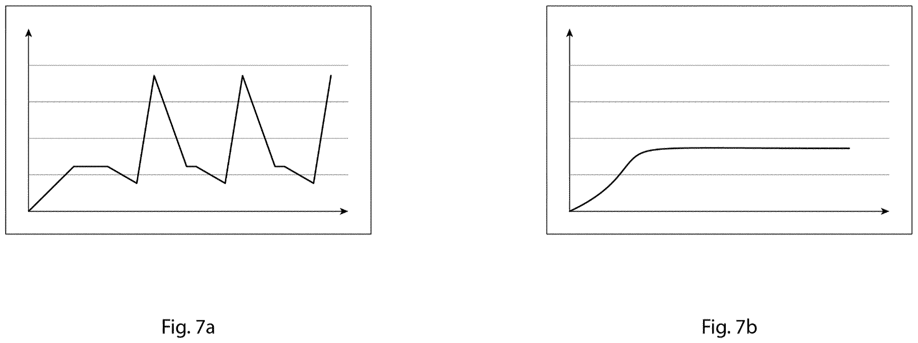

Fig. 7a     zeigt schematisch die Erntemenge bei der konventionellen Agrarlandwirtschaft in Funktion der Zeit. Dies zeigt deutlich die grossen saisonalen Unterschiede der Verfügbarkeit von reifen Kulturpflanzen. Entsprechend muss auch die Verarbeitung der Produkte an diese Fluktuation angepasst werden und geerntete Produkte müssen gelagert werden.

Fig. 7b     zeigt schematisch die - nach einer Anlaufzeit - kontinuierliche Erntemenge, welche bei der vertikalen Agrarlandwirtschaft mit dem erfindungsgemässen Gewächshaus (1) erzielt wird. Dadurch können kultivierte Kulturpflanzen P - typischerweise täglich - geerntet werden. Dies wiederum erlaubt eine kontinuierliche Verarbeitung der Ernte, wodurch die Lagerhaltung minimiert, und die Weiterverarbeitung optimiert werden kann. Demzufolge können auch die Verarbeitungsmaschinen kleiner dimensioniert werden, da sie keine so grossen Spitzen wie in der konventionellen Landwirtschaft bewältigen müssen.

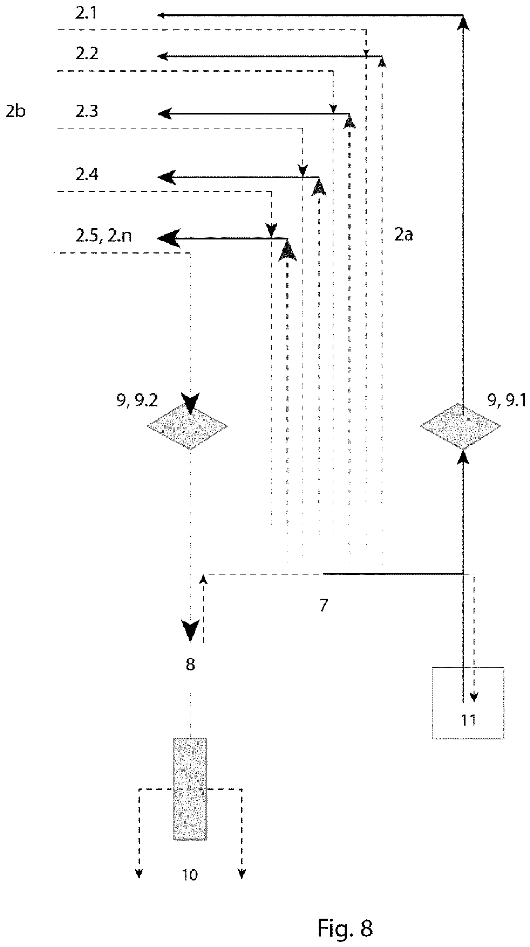

Fig. 8     zeigt schematisch das erfindungsgemässe Verfahren zum Kultivieren von Kulturpflanzen P im erfindungsgemässen Gewächshaus (1). Dabei werden die Keimtische (3) im Bestückungs- und Kontrollbereich (7), in welchem sich auch der Scan- und Mess-Bereich (11) befindet, mit Stecklingen (4) bestückt und gegebenenfalls in einem Setzlingsbereich, welcher beispielhaft Teil des Bestückungs- und Kontrollbereichs (7) ist, während einer Steckling-/Wurzelphase kultiviert.

Anschliessend werden die Keimtische (3) mit einer Vielzahl an Setzlingen (4) durch den ersten Schleusenbereich (9.1) mittels Roboter (5.1) des Robotersystems (5), in die erste Klimazone (2.1) des Wachstumsbereichs (2) eingefügt und während einer ersten Wachstumsdauer W1 kultiviert und anschliessend für die zweite Wachstumsdauer W2 in die nächste Klimazone (2.2) verschoben, wobei sie nach jeder Wachstumsdauer zum Scannen in den Scan- und Mess-Bereich (11) im Bestückungs- und Kontrollbereich (7) überführt werden. Für die weiteren Wachstumsdauer W3... Wn-1 werden die Keimtische (3) mit den Setzlingen (4) in die Klimazonen (2.3, .... 2.n-1) weiter geleitet, bis die Keimtische (3) die letzte Wachstumsdauer Wn in der letzten Klimazone (2.n) erreicht haben. Nach Ablauf der letzten Wachstumsdauer Wn werden die Keimtische (3) mit den so kultivierten Kulturpflanzen P aus der letzten Klimazone (2.n) entfernt und weiter durch den zweiten Schleusenbereich (9.2) vom Wachstumsbereich (2) zum Ernte- und Aufbereitungsbereich (8) und anschliessend zum Verarbeitungs- und/oder Abpackbereich (10) zur weiteren Verarbeitung verschoben.

**Patentansprüche**

1. Mikroklimatisches Gewächshaus (1) zur Kultivierung von Kulturpflanzen P umfassend einen automatisierten Wachstumsbereich (2) mit einer Vielzahl von Keimtischen (3), wobei die Keimtische (3) eine Vielzahl von Setzlingen (4) der Kulturpflanzen P enthalten, wobei der automatisierte Wachstumsbereich (2)

   - eine erste Klimazone (2.1) und letzte Klimazone (2.n), sowie gegebenenfalls mindestens eine zwischen der ersten und letzten Klimazone angeordnete weitere Klimazone (2.2, ..., 2.n-1) aufweist, wobei die Klimazonen gemeinsam die Klimazonen (2.1, ..., 2.n) bilden, wobei die Klimazonen (2.1, ..., 2.n) im automatisierten Wachstumsbereich (2) statisch angeordnet sind und sich in Temperatur T, Belichtung E, relativer Luftfeuchtigkeit RH und/oder Kohlendioxidgehalt ($CO_2$) unterscheiden und somit ein individuelles Klima aufweisen,
   - ein Robotersystem (5) mit mindestens einem Roboter (5.1) zum Einfügen der Keimtische (3) in die erste Klimazone (2.1) und/oder zur Entnahme der Keimtische (3) aus der letzten Klimazone (2.n), und
   - eine Haustechnik (6) zum Einstellen von individuellen Klimata sowie zum Austauschen der Gasphase in den Klimazonen (2.1, ...,2.n),

   umfasst, **dadurch gekennzeichnet, dass**

   - die Keimtische (3) je Klimazone (2.1, ..., 2.n) weniglagig angeordnet sind, wobei die Keimtische (3) mit den jüngsten Setzlingen (4) der ersten Klimazone (2.1) und die Keimtische (3) mit den ältesten Setzlingen (4) der letzten Klimazone (2.n) zugeordnet sind, und
   - die Raumhöhe $R_1$ der ersten Klimazone (2.1) kleiner ist als die Raumhöhe $R_n$ der letzten Klimazone (2.n).

2. Gewächshaus (1) nach Anspruch 1, **dadurch gekennzeichnet, dass** der automatisierte Wachstumsbereich (2)

   - einen Roboterbereich (2a) sowie einen Kulturbereich (2b) mit den Klimazonen (2.1, ... 2.n) umfasst,
   - je Kulturpflanze P 2 bis 30, insbesondere 3 bis 10, Klimazonen (2.1, ..., 2.n) umfasst, wobei jede Klimazone (2.1, ...., 2.n) in eine Vielzahl von Tagesparzellen (2c) unterteilt sein kann, und/oder
   - dass die Klimazonen (2.1, ..., 2n) für die Kultivierung der gleichen Kulturpflanze P während verschiedenen Wachstumsphasen vorgesehen sind, wobei die Setzlinge (4) in allen Klimazonen (2.1, ...., 2n) den gleichen Keimtischen (3) zugeordnet sind.

3. Gewächshaus (1) nach Anspruch 1 oder 2, **dadurch gekennzeichnet, dass**

   - die Raumhöhe $R_n$ der letzten Klimazone (2.n) mindestens 20%, insbesondere mindestens 30%, grösser ist als die Raumhöhe $R_1$ der ersten Klimazone (2.1), und/oder
   - mindestens eine nachfolgende Klimazone (2.2, ..., 2.n) eine um mindestens 10%, insbesondere eine um mindestens 20%, höhere Raumhöhe R aufweist als die vorhergehende Klimazone (2.1, ..., 2.n-1).

4. Gewächshaus (1) nach mindestens einem der Ansprüche 1 bis 3, **dadurch gekennzeichnet, dass** die Keimtische (3)

   - mindestens 4 Setzlinge (4),
   - bis zu 512, bevorzugt bis zu 128, insbesondere bis zu 64 Setzlinge (4), und/oder
   - 9 bis zu 128 Setzlinge (4) pro m$^2$, insbesondere 9 bis zu 64 Setzlinge (4) pro m$^2$

   aufnehmen können; und/oder

   - die die vertikale Höhe der seitlichen Begrenzung der Keimtische (3) maximal 50%, insbesondere maximal 20%, der Raumhöhe $R_1$ der ersten Klimazone (2.1) entspricht.

**5.** Gewächshaus (1) nach mindestens einem der Ansprüche 1 bis 4, **dadurch gekennzeichnet, dass** das Gewächshaus (1) neben dem automatisierten Wachstumsbereich (2)

- einen Bestückungs- und Kontrollbereich (7) zur Bestückung und Kontrolle der Keimtische (3) mit Setzlingen (4),
- einen Ernte- und Aufbereitungsbereich (8) zur Ernte und Aufbereitung der gewachsenen Pflanzen sowie zur Wartung und Aufbereitung der Keimtische,
- mindestens einen Schleusenbereich (9), insbesondere einen ersten Schleusenbereich (9.1) zwischen dem Bestückungs- und Kontrollbereich (7) und dem Wachstumsbereich (2) und/oder einen zweiten Schleusenbereich (9.2) zwischen dem Wachstumsbereich (2) und dem Ernte- und Aufbereitungsbereich (8), sowie
- gegebenenfalls einen Verarbeitungs- und/oder Abpackbereich (10) zur Weiterverarbeitung der geernteten Pflanzen

aufweist.

**6.** Gewächshaus (1) nach mindestens einem der Ansprüche 1 bis 5, **dadurch gekennzeichnet, dass** das Gewächshaus (1) mindestens einen Scan- und Mess-Bereich (11) zum Scannen, Fotografieren und Messen der Setzlinge (4) aufweist, wobei bevorzugt mindestens ein Scan- und Mess-Bereich (11) vor, innerhalb oder nach dem Schleusenbereich (9), und/oder vor oder nach jeder Klimazone (2.1, ..., 2.n) angeordnet ist.

**7.** Gewächshaus (1) nach mindestens einem der Ansprüche 1 bis 6, **dadurch gekennzeichnet, dass**

- die Setzlinge (4) in Form von Pflanzensamen, Pflanzensetzlingen und/oder Pflanzenstecklingen in die Keimtische (3) eingebracht sind,
- die Keimtische (3) ein Nährmedium (4.1) enthalten, in welchem die Setzlinge (4) eingebettet sind, und/oder
- die Kulturpflanzen P C3- und/oder C4-Pflanzen, insbesondere Tomaten, Chili, Paprika, Kartoffel, Reis, Mais, Zuckerrohr, Amarant, Hirse, Raps, Getreide und Eiweisspflanzen wie Weizen, Roggen, Gerste, Hafer, Dinkel, Hirse, Sojabohnen, Greeny Leaves wie Salate und Pak Choi, Kräuter wie Oregano, Krokusse wie Safran, Kaffee, Mohn, Pilze, Passionsfrucht, Maracuja und/oder Cannabis, insbesondere medizinisches THC-haltiges, THC-freies Cannabis und/oder CBD-haltiges Cannabis, sind.

**8.** Gewächshaus (1) nach mindestens einem der Ansprüche 1 bis 7, **dadurch gekennzeichnet, dass** die Klimazonen (2.1, ..., 2.n) zur Kultivierung der Kulturpflanzen P

- Beleuchtungsmittel zur individuellen Belichtung der Keimtische (3),
- Eine Wasser- und Nährstoffzufuhr, insbesondere mittels Sprühnebel, Wasserschlauch mit Tropfsystem und/oder Fluttisch,
- Ein Belüftungssystem mit Gaseinlass und Gasauslass, und/oder
- Ein Sensorsystem umfassend mindestens einen Sensor zur Bestimmung der Temperatur, relativen Luftfeuchtigkeit, Gesundheit der Pflanzen wie Blattfarbe, des Drucks, $CO_2$-Gehalts, $O_2$-Gehalts, pH-Wert, einzelne Nährstoffkomponenten, elektrische Leitfähigkeit der Nährlösung, Art und Intensität der Beschallung und/oder Sensoren zur Überprüfung von Schädlingen, der Blätter und/oder Blüten der Setzlinge (4),

aufweisen.

**9.** Gewächshaus (1) nach mindestens einem der Ansprüche 1 bis 8, **dadurch gekennzeichnet, dass**

- die erste Klimazone (2.1) und die letzte Klimazone (2.n) nebeneinander oder übereinander und die gegebenenfalls weiteren Klimazonen (2.2, ..., 2.n-1) neben und/oder unterhalb der ersten Klimazone (2.1) und neben und/oder oberhalb der letzten Klimazone (2.n) angeordnet sind, und/oder
- die Klimazonen (2.1, ..., 2.n) einen Eingang E und einen Ausgang A aufweisen, wobei

  o die Klimazonen (2.1, ..., 2.n) und/oder die Keimtische (3) Bewegungsmittel (12) aufweisen, um die Keimtische (3) innerhalb einer Klimazone (2.1, ..., 2.n) vom Eingang E zum Ausgang A bewegen zu können, oder
  o die Keimtische (3) innerhalb einer Klimazone (2.1, ..., 2.n) stationär angeordnet sind.

**10.** Verfahren zum Kultivieren von Kulturpflanzen P im Gewächshaus (1) nach mindestens einem der Ansprüche 1 bis 9, **dadurch gekennzeichnet, dass** die Keimtische (3)

i) mit einer Vielzahl von Setzlingen (4) bestückt werden und die Keimtische (3), gegebenenfalls mittels Roboter (5.1) des Robotersystems (5), in die erste Klimazone (2.1) des Wachstumsbereichs (2) eingefügt werden,

ii) in der ersten Klimazone (2.1) während einer ersten Wachstumsdauer W1 verweilt und anschliessend für die zweite Wachstumsdauer W2 in die nächste Klimazone (2.2; 2.n) verschoben werden,

iii) gegebenenfalls für weitere Wachstumsdauer W3... Wn-1 in nachfolgende Klimazonen (2.3, .... 2.n-1) verschoben werden, bis die Keimtische (3) die letzte Wachstumsdauer Wn in der letzten Klimazone (2.n) erreicht haben, und

iv) nach Ablauf der letzten Wachstumsdauer Wn die Keimtische (3) mit den so kultivierten Kulturpflanzen P aus der letzten Klimazone (2.n) entfernt werden.

**11.** Verfahren nach Anspruch 10, **dadurch gekennzeichnet, dass** die Keimtische (3) mit den Setzlingen (4)

- während einer Wachstumsdauer W in einer Klimazone

  o mittels Bewegungsmittel (12) vom Eingang E zum Ausgang A der jeweiligen Klimazone (2.1, .... 2.n) bewegt werden, oder
  o innerhalb einer Klimazone (2.1, ..., 2.n) stationär angeordnet sind,

- mittels Bewegungsmittel (12) und/oder Roboter (5.1) von einer Klimazone zur nächsten Klimazone verschoben werden, und/oder
- am Ende der letzten Wachstumsdauer Wn aus der letzten Klimazone (2.n) mittels Bewegungsmittel (12) oder Roboter (5.1) entfernt werden.

**12.** Verfahren nach Anspruch 10 oder 11, **dadurch gekennzeichnet, dass** Keimtische (3) mit Setzlingen (4) in die erste Klimazone (2.1) regelmässig, bevorzugt täglich, eingefügt werden, und die Fläche der weiteren Klimazonen (2.2, .... 2.n) in Abhängigkeit der Wachstumsdauer in den jeweiligen Klimazonen so bemessen wird, dass regelmässig, bevorzugt täglich, Keimtische (3) mit kultivierten Kulturpflanzen P aus der letzten Klimazone (2.n) entfernt werden können.

**13.** Verfahren nach mindestens einem der Ansprüche 10 bis 12, **dadurch gekennzeichnet, dass** die Anzahl Keimtische (3) mit Setzlingen (4), die pro Tag in die erste Klimazone (2.1) eingefügt werden, der Formel (1)

$$X_1 = Y_1 / Z_1 \qquad\qquad (1)$$

genügt, wobei

$X_1$ für die Anzahl der in die erste Klimazone (2.1) eingefügter Keimtische (3) mit Setzlingen (4) pro Tag,
$Y_1$ für die Anzahl der Keimtische (3) mit Setzlingen (4), welche in der ersten Klimazone (2.1) eingefügt werden kann, und
$Z_1$ für Anzahl Tage der beabsichtigten Wachstumsdauer der Setzlinge (4) in den Keimtischen (3) in der ersten Klimazone (2.1), steht.

**14.** Verfahren nach mindestens einem der Ansprüche 10 bis 13, **dadurch gekennzeichnet, dass** die Grundfläche $F_{KZ}$ der jeweiligen Klimazonen (2.2, .... 2.n) den Formeln (2) und (3)

$$F_{KZ} \qquad = \qquad Y_{(2.2, .... 2.n)} * F_{KT} \qquad (2)$$

$$Y_{(2.2, .... 2.n)} \qquad = \qquad X_{1 *} Z_{(2.2, .... 2.n)} \qquad (3)$$

genügt, wobei

$F_{KZ}$ für die Grundfläche der jeweiligen Klimazonen (2.2, .... 2.n),
$F_{KT}$ für die mittlere Grundfläche der Keimtische (3),
$X_1$ für die Anzahl der in die erste Klimazone (2.1) eingefügten Keimtische (3) pro Tag,
$Y_{(2.2, ....2.n)}$ für die Anzahl der Keimtische (3) mit Setzlingen (4), welche in der jeweiligen Klimazone (2.2, . 2.n) eingefügt werden kann, und
$Z_{(2.2, \ldots 2.n)}$ für die Anzahl Tage der beabsichtigten Wachstumsdauer der Setzlinge (4) in den Keimtischen (3) in der jeweiligen Klimazone (2.2, .... 2.n),

steht.

15. Verfahren nach mindestens einem der Ansprüche 10 bis 14, **dadurch gekennzeichnet, dass** die Keimtische (3)

- im Bestückungs- und Kontrollbereich (7) mit den Setzlingen (4) und gegebenenfalls dem Nährmedium (4.1) bestückt werden und anschliessend, gegebenenfalls durch den ersten Schleusenbereich (9.1), in die erste Klimazone (2.1) des Wachstumsbereichs (2) eingeführt werden, und/oder
- die Keimtische (3) mit den kultivierten Kulturpflanzen P aus der letzten Klimazone (2.n) des Wachstumsbereichs (2), gegebenenfalls durch den zweiten Schleusenbereich (9.2), in den Ernte- und Aufbereitungsbereich (8) überführt werden, in welchem die Kulturpflanzen P geerntet, aufbereitet, und gegebenenfalls anschliessend im Verarbeitungs- und/oder Abpackbereich (10) weiter verarbeitet und die erhaltenen Produkte abgepackt werden.

Fig. 1

EP 4 082 330 A1

Fig. 2

23

Fig. 3

Fig. 4

Fig. 6

Fig. 7b

Fig. 7a

Fig. 8

**Europäisches Patentamt**
**European Patent Office**
**Office européen des brevets**

# EUROPÄISCHER RECHERCHENBERICHT

**Nummer der Anmeldung**

EP 21 17 1103

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | WO 2019/077571 A1 (TRAVAGLINI S P A [IT]) 25. April 2019 (2019-04-25) * Abbildungen 8b-11d, 16-20 * * Seite 11, Zeilen 26-30 * * Seite 24, Zeilen 19-28 * * Seite 25, Zeilen 4-15 * * Seite 26, Zeile 1 - Seite 27, Zeile 6 * ----- | 1-15 | INV. A01G9/24 A01G9/14 |
| A | US 2012/054061 A1 (FOK PHILIP E [US] ET AL) 1. März 2012 (2012-03-01) * Ansprüche 1, 5; Abbildung 1 * ----- | 1,10 | |

**RECHERCHIERTE SACHGEBIETE (IPC)**

A01G

Der vorliegende Recherchenbericht wurde für alle Patentansprüche erstellt

| Recherchenort | Abschlußdatum der Recherche | Prüfer |
|---|---|---|
| Den Haag | 14. Oktober 2021 | Guillem Gisbert, I |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 17 1103

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-10-2021

| Im Recherchenbericht angeführtes Patentdokument | Datum der Veröffentlichung | Mitglied(er) der Patentfamilie | Datum der Veröffentlichung |
|---|---|---|---|
| WO 2019077571 A1 | 25-04-2019 | CA 3079068 A1 | 25-04-2019 |
| | | EP 3697198 A1 | 26-08-2020 |
| | | US 2020260673 A1 | 20-08-2020 |
| | | WO 2019077571 A1 | 25-04-2019 |
| US 2012054061 A1 | 01-03-2012 | US 2012054061 A1 | 01-03-2012 |
| | | US 2014344099 A1 | 20-11-2014 |
| | | US 2014344100 A1 | 20-11-2014 |
| | | US 2015027048 A1 | 29-01-2015 |
| | | US 2015027356 A1 | 29-01-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019077571 A

- EP 3257367 A